# EUROPEAN PATENT APPLICATION

(11) **EP 4 844 037 A1**
(43) Date of publication of application: **25.11.2026**
(21) Application number: 25742016.6
(22) Date of filing: 17.01.2025
(51) Int. Cl.: C09D 175/12, B05D 7/02, B29C 45/16, B32B 27/30, B32B 27/36, B32B 27/40, C08G 18/32, C08G 18/42, C08G 18/62, C08J 7/04, C09D 7/63

(54) **COATING COMPOSITION AND IN-MOLD COATING METHOD**

(30) Priority: 18.01.2024 JP 2024005982
(71) Applicant: Kansai Paint Co., Ltd., Amagasaki-shi, Hyogo 661-8555 (JP)
(72) Inventor: SHIMURA, Kunio, Hiratsuka-shi, Kanagawa 254-8562 (JP); KOMURA, Katsuto, Hiratsuka-shi, Kanagawa 254-8562 (JP); MATSUSHITA, Rintaro, Hiratsuka-shi, Kanagawa 254-8562 (JP)
(74) Representative: Gill Jennings & Every LLP
(86) International application number: PCT/JP2025/001307
(87) International publication number: WO 2025/154791

(57) **Abstract**

A purpose of the present disclosure is to provide a coating composition which can form coating films excellent in terms of adhesiveness to polycarbonate resin bases, releasability from molds, and smoothness and which has a low VOC content. The coating composition comprises (A) hydroxylated compounds, (B) a polyisocyanate compound, and (C) a curing catalyst and has a solid concentration of 90 mass% or higher. The hydroxylated compounds (A) include a hydroxylated compound (A1) having a nurate ring structure. The coating composition has a content of the hydroxylated compound (A1) having a nurate ring structure within the range of 5-50 mass% based on the total amount of the solid components of the hydroxylated compounds (A).

## Description

### FIELD

The present invention relates to a coating composition and an in-mold coating method.

### BACKGROUND

Conventionally, in order to impart excellent appearance and various performance properties to the surface of a substrate, a coating composition has been applied to the substrate surface, and the resulting wet coating film has been cured to form a coating film. In recent years, from the viewpoint of reducing environmental load, there has been a demand for reduction of volatile organic compounds (VOCs) contained in coating compositions, as well as for reduction of the energy required for air-conditioning during coating.

In general, an automobile body includes a metallic material forming the body and a resin material forming parts such as bumpers. In recent years, due to improvements in the strength and the like of resin materials, conversion from metallic materials to lighter resin materials has been progressing at portions where metallic materials have conventionally been used. Among such resin materials, application of polycarbonate resin materials, which are excellent in weather resistance and the like, has been under consideration.

Various coating methods are known for resin materials, and one such method is in-mold coating. In-mold coating is a coating method in which, after a resin material is molded in a mold, a coating material is injected between the molded article and an inner wall of the mold, and, after the coating material is cured, the molded article having a coating film formed thereon is taken out from the mold. In this coating method, coating and curing are carried out in a closed system. In this method, in order to avoid defects such as bubbles in the coating film, the coating composition is required to be substantially solvent-free.

In the above in-mold coating, high adhesion between the coating film and the resin material, as well as good releasability of the coating film from the mold, are required.
Patent Literature 1 discloses a two-component coating material composition comprising a coating material base component A and a curing component B, wherein the coating material base component A comprises: (i) at least one polyol A1 selected from the group of polyols containing ester groups, the polyol A1 having a hydroxyl value of 300 to 500 mgKOH/g and a hydroxyl functionality of greater than 2; (ii) at least one aliphatic polyol A2 of general formula (I): R¹-(OH)ₚ (where R¹ is a p-valent branched, cyclic or linear, saturated or unsaturated aliphatic hydrocarbon radical having 5 to 18 carbon atoms, the radical R1 optionally containing one or more tertiary amino groups, and p is 2 to 6), which does not contain ether groups or ester groups; (iii) at least one species A3 of general formula (II): R²-(C=O)ᵣ-O-(AO)s-R³ (where R² is a saturated or unsaturated aliphatic hydrocarbon radical having 6 to 30 carbon atoms, R³ is H, a PO(OH)₂ radical, a radical of an optionally partially phosphorylated monosaccharide or disaccharide, or a radical of an optionally partially phosphorylated alditol, AO represents one or more alkylene oxide radicals selected from ethylene oxide, propylene oxide and butylene oxide, r is 0 or 1, and s is 0 to 30); (iv) at least one crosslinking catalyst A4 selected from the group of organotin compounds; (v) any one or more polyamines A5 having at least two secondary amino groups and having an amine value of 120 to 280 mgKOH/g; and (ix) any one or more additives A9 selected from the group consisting of wetting agents and/or dispersants, rheology aids and flow control agents, the curing component B comprising (i) at least one polyisocyanate B1 having on average 2.4 to 5 NCO groups, the two-component coating material composition contains, according to ASTM D2369 (2015), at least 96 mass % of solids based on the total mass of the two-component coating material composition, and is characterized in that a molar ratio of the NCO groups in the curing component B to acidic hydrogen atoms of the hydroxyl groups, primary amino groups and secondary amino groups in the coating material base component A is from 1:1.15 to 1:0.95. This patent literature describes that the two-component coating material composition makes it possible, without using an external release agent, to achieve damage-free demolding, typically from metal mold surfaces, while at the same time ensuring extremely good adhesion to the substrate, and that, for example, further coating films such as a base coat and a clear coat can be reapplied and a surface of extremely high quality can be formed without costly and inconvenient washing and/or polishing steps.

### [CITATION LIST]

### [PATENT LITERATURE]

[PTL 1] Japanese Unexamined Patent Publication (Translation of PCT International Application) No. 2020-528103

### SUMMARY

### [TECHNICAL PROBLEM]

In the technique disclosed in Patent Literature 1, although the VOC content of the resulting coating composition is low and the coating film formed exhibits excellent releasability from a mold, the adhesion of the formed coating film to a polycarbonate resin substrate is sometimes insufficient.
It is an object of the present disclosure to provide a coating composition which is capable of forming a coating film having excellent adhesion to a polycarbonate resin substrate, releasability from a mold, and smoothness, and which has a low VOC content.

### [SOLUTION TO PROBLEM]

In view of achieving the above object, the present inventors have conducted intensive studies, and as a result have found that the above object can be achieved by a coating composition comprising: a hydroxyl group-containing compound (A); a polyisocyanate compound (B); and a curing catalyst (C), and having a solids concentration of 90 mass % or more, wherein
the hydroxyl group-containing compound (A) comprises a hydroxyl group-containing compound having an isocyanurate ring structure (A1).

That is, the present disclosure relates to the following <1> to <13>.
<1> A coating composition comprising: a hydroxyl group-containing compound (A); a polyisocyanate compound (B); and a curing catalyst (C), and having a solids concentration of 90 mass % or more, wherein
   the hydroxyl group-containing compound (A) comprises a hydroxyl group-containing compound having an isocyanurate ring structure (A1).
<2> The coating composition according to <1>, wherein
   a content of the hydroxyl group-containing compound having an isocyanurate ring structure (A1) is from 5 to 50 mass %, based on a total solids amount of the hydroxyl group-containing compound (A).
<3> The coating composition according to <1> or <2>, wherein
   the hydroxyl group-containing compound (A) comprises a hydroxyl group-containing acrylic resin (A2).
<4> The coating composition according to any one of <1> to <3>, wherein
   the hydroxyl group-containing compound (A) comprises a polycaprolactone resin having three or more hydroxyl groups in one molecule (A3').
<5> The coating composition according to any one of <1> to <4>, wherein
   a content of the curing catalyst (C) is in a range of from 0.1 to 2.0 mass % based on a total amount of the coating composition.
<6> The coating composition according to any one of <1> to <5>, further comprising a dehydrating agent (D).
<7> The coating composition according to any one of <1> to <6>, which is configured such that, when (i) the coating composition is applied onto a polycarbonate resin substrate so that a film thickness after being dried is 200 µm to form an uncured coating film, (ii) the uncured coating film is heat-cured at 80°C for 1 minute to form a cured coating film, and (iii) a Martens hardness is measured by indenting the cured coating film with a square pyramidal diamond indenter at a temperature of 23°C and a humidity of 50% RH for 20 seconds to a maximum test load of 20 mN,
   the cured coating film has the Martens hardness in a range of from 60 to 150 N/mm².
<8> The coating composition according to any one of <1> to <7>, wherein the coating composition is an in-mold coating composition.
<9> The coating composition according to <8>, further comprising an internal mold release agent (E).
<10> The coating composition according to <9>, wherein
   the internal mold release agent (E) comprises a fatty acid amide.
<11> An in-mold coating method comprising:
   injecting an in-mold coating composition between a molded substrate and an inner wall of a mold;
   curing the in-mold coating composition; and
   taking out a coated molded article from the mold, wherein
   the in-mold coating composition is the coating composition according to any one of <1> to <10>.
<12> The in-mold coating method according to <11>, wherein
   the in-mold coating composition further comprises an internal mold release agent (E).
<13> The in-mold coating method according to <12>, wherein
   the internal mold release agent (E) comprises a fatty acid amide.

### [ADVANTAGEOUS EFFECTS OF INVENTION]

According to the present disclosure, a coating composition which is capable of forming a coating film having excellent adhesion to a polycarbonate resin substrate, releasability from a mold, and smoothness, and which has a low VOC content can be provided.

### DESCRIPTION OF EMBODIMENTS

The present disclosure will now be described in further detail, however, it should be understood that the following description illustrates only examples of preferred embodiments, and the present disclosure is not limited to the details thereof.

### [coating composition]

The coating composition according to the present disclosure comprises: a hydroxyl group-containing compound (A); a polyisocyanate compound (B); and a curing catalyst (C), and has a solids concentration of 90 mass % or more, wherein the hydroxyl group-containing compound
(A) comprises a hydroxyl group-containing compound having an isocyanurate ring structure (A1).

Incidentally, in the present description, "solids" means non-volatile components such as resins, curing agents and pigments that remain after drying at 80°C for 30 minutes. The solids can be obtained, for example, by weighing a sample into a heat-resistant vessel such as an aluminum-foil cup, spreading the sample over the bottom surface of the vessel, drying at 80°C for 30 minutes, and weighing the mass of the components remaining after drying.

Further, in the present description, "solids concentration" means the mass percentage of the solids contained in a composition. Accordingly, the solids concentration of a composition can be calculated, for example, by weighing 1.0 g of the composition into a heat-resistant vessel such as an aluminum-foil cup, spreading the composition over the bottom surface of the vessel, drying at 80°C for 30 minutes, weighing the mass of the components of the composition remaining after drying, and determining the percentage of the mass of the components remaining after drying relative to the total mass of the composition before drying.

The solids concentration of the coating composition according to the present disclosure is 90 mass% or more. By the solids concentration of the coating composition being 90 mass% or more, it is possible to reduce the VOC content in the obtained coating composition.
From the viewpoint of reducing the VOC content in the obtained coating composition and the like, the solids concentration of the coating composition according to the present disclosure is preferably in a range of 93 to 100 mass%, more preferably in a range of 95 to 100 mass%, and even more preferably in a range of 97 to 100 mass%.

### [The hydroxyl group-containing compound (A)]

The hydroxyl group-containing compound (A) is a compound having at least one hydroxyl group in one molecule. Examples of the hydroxyl group-containing compound (A), as hydroxyl group-containing polymers, include, for example, a hydroxyl group-containing compound having an isocyanurate ring structure (A1), a hydroxyl group-containing acrylic resin (A2), a hydroxyl group-containing polycaprolactone resin (A3), a hydroxyl group-containing polyester resin, a hydroxyl group-containing polyether resin, a hydroxyl group-containing polycarbonate resin, a hydroxyl group-containing acrylic-modified polyester resin, a hydroxyl group-containing polyurethane resin, a hydroxyl group-containing epoxy resin, a hydroxyl group-containing alkyd resin, and any combination thereof.

The hydroxyl group-containing compound (A) according to the present disclosure comprises a hydroxyl group-containing compound having an isocyanurate ring structure (A1). By the hydroxyl group-containing compound (A) according to the present disclosure comprising the hydroxyl group-containing compound having an isocyanurate ring structure (A1), adhesion of the resulting coating film to a polycarbonate resin substrate can be improved.

### [The hydroxyl group-containing compound having an isocyanurate ring structure (A1)]

As the hydroxyl group-containing compound having an isocyanurate ring structure (A1), examples include tris(hydroxyalkyl)isocyanurates such as tris(hydroxyethyl)isocyanurate, tris(hydroxypropyl)isocyanurate and tris(hydroxybutyl)isocyanurate; ε-caprolactone-modified products of the tris(hydroxyalkyl)isocyanurates; alkylene oxide-modified products of the tris(hydroxyalkyl)isocyanurates; esterified products of tris(hydroxyethyl)isocyanurate obtained by reacting tris(hydroxyethyl)isocyanurate, a diol compound and a dicarboxylic acid in a state where hydroxyl groups in the tris(hydroxyethyl)isocyanurate and the diol compound are in excess relative to carboxyl groups in the dicarboxylic acid; reaction products obtained by reacting a polyisocyanate compound having an isocyanurate ring structure and a diol compound in a state where hydroxyl groups in the diol compound are in excess relative to isocyanate groups in the polyisocyanate compound having an isocyanurate ring structure; and any combination thereof.

The hydroxyl group-containing compound having an isocyanurate ring structure (A1) preferably contains an ε-caprolactone-modified product of tris(2-hydroxyethyl)isocyanurate, from the viewpoint of smoothness of a coating film to be formed, adhesiveness to a polycarbonate resin substrate, and the like.

The hydroxyl group-containing compound having an isocyanurate ring structure (A1) preferably has a number-average molecular weight of 300 or more, more preferably 400 or more, and still more preferably 450 or more, and preferably has a number-average molecular weight of 1500 or less, more preferably 1300 or less, and still more preferably 1100 or less, from the viewpoint of smoothness of a coating film to be formed, releasability from a mold, and the like.

The hydroxyl value of the hydroxyl group-containing compound having an isocyanurate ring structure (A1) is preferably 50 mgKOH/g or more, more preferably 100 mgKOH/g or more, and still more preferably 150 mgKOH/g or more, and preferably 600 mgKOH/g or less, more preferably 400 mgKOH/g or less, and still more preferably 300 mgKOH/g or less, from the viewpoint of adhesiveness of a coating film to be formed to a polycarbonate resin substrate, releasability from a mold, and the like.

Incidentally, in the present description, the number-average molecular weight and the weight-average molecular weight are values obtained by converting, into polystyrene molecular weights, retention times (retention volumes) measured by gel permeation chromatography (GPC) on the basis of retention times (retention volumes) of standard polystyrene having known molecular weights measured under the same conditions. Specifically, the measurement can be carried out using a gel permeation chromatograph "HLC-8120GPC" (trade name, manufactured by TOSOH CORPORATION), equipped with four columns "TSKgel G4000HXL", "TSKgel G3000HXL", "TSKgel G2500HXL" and "TSKgel G2000HXL" (trade names, all manufactured by TOSOH CORPORATION), using a differential refractometer as a detector, with tetrahydrofuran as a mobile phase, at a measurement temperature of 40°C and a flow rate of 1 mL/min.

The content of the hydroxyl group-containing compound having an isocyanurate ring structure (A1) is preferably 5 mass% or more, more preferably 7 mass% or more, and still more preferably 10 mass% or more, and preferably 50 mass% or less, more preferably 45 mass% or less, and still more preferably 40 mass% or less, based on the total solids amount of the hydroxyl group-containing compound (A), from the viewpoint of smoothness of a coating film to be formed, adhesiveness to a polycarbonate resin substrate, releasability from a mold, and the like.

### [The hydroxyl group-containing acrylic resin (A2)]

The hydroxyl group-containing compound (A) preferably contains a hydroxyl group-containing acrylic resin (A2), from the viewpoint of releasability of a coating film to be formed from a mold and the like.

The hydroxyl group-containing acrylic resin (A2) can be produced, for example, by copolymerizing a hydroxyl group-containing polymerizable unsaturated monomer and another polymerizable unsaturated monomer that is copolymerizable therewith, by a known method such as a solution polymerization method or an emulsion polymerization method in water, and is preferably produced by the solution polymerization method.

It should be noted however, that in the present disclosure, a hydroxyl group-containing acrylic resin having an isocyanurate ring structure is not included in the hydroxyl group-containing acrylic resin (A2), but is included in the hydroxyl group-containing compound having an isocyanurate ring structure (A1).

When the hydroxyl group-containing acrylic resin (A2) is produced by a solution polymerization method, it is preferable, from the viewpoint of reducing the VOC content of the resulting coating composition, that a solvent used in the solution polymerization method contains a polyhydric alcohol.

The hydroxyl group-containing polymerizable unsaturated monomer is a compound having at least one hydroxyl group and at least one polymerizable unsaturated bond in one molecule. Examples of the hydroxyl group-containing polymerizable unsaturated monomer include: monoesters of (meth)acrylic acid and divalent alcohols having 2 to 8 carbon atoms, such as 2-hydroxyethyl (meth)acrylate, 2-hydroxypropyl (meth)acrylate, 3-hydroxypropyl (meth)acrylate and 4-hydroxybutyl (meth)acrylate; ε-caprolactone-modified products of the monoesters of the (meth)acrylic acid and the divalent alcohols having 2 to 8 carbon atoms; N-hydroxymethyl (meth)acrylamide; allyl alcohol; and (meth)acrylates having a polyoxyalkylene chain whose molecular terminal is a hydroxyl group.
However, in the present embodiment, a monomer that corresponds to a polymerizable unsaturated monomer having an ultraviolet-absorbing functional group, which will be described later as monomer (xvii), is, even if it has a hydroxyl group, to be defined as another polymerizable unsaturated monomer that is copolymerizable with the hydroxyl group-containing polymerizable unsaturated monomer, and is excluded from the hydroxyl group-containing polymerizable unsaturated monomer. These monomers may be used alone or in combination of two or more.

Examples of other polymerizable unsaturated monomers that are copolymerizable with the hydroxyl group-containing polymerizable unsaturated monomer include the following monomers (i) to (xx), and arbitrary combinations thereof.
(i) Alkyl or cycloalkyl (meth)acrylates: examples include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, tricyclodecanyl (meth)acrylate, and the like.
(ii) Polymerizable unsaturated monomers having an isobornyl group: isobornyl (meth)acrylate, and the like.
(iii) Polymerizable unsaturated monomers having an adamantyl group: adamantyl (meth)acrylate, and the like.
(iv) Polymerizable unsaturated monomers having a tricyclodecenyl group: tricyclodecenyl (meth)acrylate, and the like.
(v) Polymerizable unsaturated monomers having an aromatic ring: benzyl (meth)acrylate, styrene, α-methylstyrene, vinyltoluene, and the like.
(vi) Polymerizable unsaturated monomers having an alkoxysilyl group: vinyltrimethoxysilane, vinyltriethoxysilane, vinyltris(2-methoxyethoxy)silane, γ-(meth)acryloyloxypropyltrimethoxysilane, γ-(meth)acryloyloxypropyltriethoxysilane, and the like.
(vii) Polymerizable unsaturated monomers having a fluorinated alkyl group: perfluoroalkyl (meth)acrylates such as perfluorobutylethyl (meth)acrylate, perfluorooctylethyl (meth)acrylate, and the like; fluoroolefins, and the like.
(viii) Polymerizable unsaturated monomers having a photopolymerizable functional group such as a maleimide group.
(ix) Vinyl compounds: examples include N-vinylpyrrolidone, ethylene, butadiene, chloroprene, vinyl propionate, vinyl acetate, and the like.
(x) Carboxyl group-containing polymerizable unsaturated monomers: examples include (meth)acrylic acid, maleic acid, crotonic acid, β-carboxyethyl (meth)acrylate, and the like.
(xi) Nitrogen-containing polymerizable unsaturated monomers: examples include (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylenebis(meth)acrylamide, ethylenebis(meth)acrylamide, adducts of glycidyl (meth)acrylate with amine compounds, and the like.
(xii) Polymerizable unsaturated monomers having two or more polymerizable unsaturated groups in one molecule: examples include allyl (meth)acrylate, ethylene glycol di(meth)acrylate, 1,4-butanediol di(meth)acrylate, neopentyl glycol di(meth)acrylate, 1,6-hexanediol di(meth)acrylate, and the like.
(xiii) Epoxy group-containing polymerizable unsaturated monomers: glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether, and the like.
(xiv) (Meth)acrylates having a polyoxyethylene chain whose molecular terminal is an alkoxy group.
(xv) Polymerizable unsaturated monomers having a sulfonic acid group: examples include 2-acrylamido-2-methylpropanesulfonic acid, 2-sulfoethyl (meth)acrylate, allylsulfonic acid, 4-styrenesulfonic acid and the like; sodium salts and ammonium salts of these sulfonic acids, and the like.
(xvi) Polymerizable unsaturated monomers having a phosphoric acid group: examples include acid phosphooxyethyl (meth)acrylate, acid phosphooxypropyl (meth)acrylate, acid phosphooxy poly(oxyethylene) glycol (meth)acrylate, acid phosphooxy poly(oxypropylene) glycol (meth)acrylate, and the like.
(xvii) Polymerizable unsaturated monomers having an ultraviolet-absorbing functional group: examples include 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-(2'-hydroxy-5'-methacryloyloxyethylphenyl)-2H-benzotriazole, and the like.
(xviii) Light-stabilizing polymerizable unsaturated monomers: examples include 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine, and the like.
(xix) Polymerizable unsaturated monomers having a carbonyl group: acrolein, diacetone acrylamide, diacetone methacrylamide, acetoacetoxyethyl methacrylate, formylstyrol, vinyl alkyl ketones having from 4 to 7 carbon atoms (for example, vinyl methyl ketone, vinyl ethyl ketone, vinyl butyl ketone), and the like.
(xx) Polymerizable unsaturated monomers having an acid anhydride group: maleic anhydride, itaconic anhydride, citraconic anhydride, and the like.

In the present description, the term "polymerizable unsaturated group" means an unsaturated group capable of undergoing radical polymerization. Examples of such polymerizable unsaturated groups include a vinyl group, a (meth)acryloyl group, a (meth)acrylamide group, a vinyl ether group, an allyl group, a propenyl group, an isopropenyl group, a maleimide group, and the like.
Furthermore, in the present description, the term "(meth)acrylate" means acrylate and/or methacrylate. The term "(meth)acrylic acid" means acrylic acid and/or methacrylic acid. The term "(meth)acryloyl" means acryloyl and/or methacryloyl. The term "(meth)acrylamide" means acrylamide and/or methacrylamide.

The number-average molecular weight of the hydroxyl group-containing acrylic resin (A2) is, from the viewpoint of smoothness of a coating film to be formed and releasability from a mold, preferably 800 or more, more preferably 1000 or more, still more preferably 1200 or more, and preferably 3000 or less, more preferably 2500 or less, still more preferably 2200 or less.

The hydroxyl value of the hydroxyl group-containing acrylic resin (A2) is, from the viewpoint of releasability of a coating film to be formed from a mold, preferably 50 mgKOH/g or more, more preferably 70 mgKOH/g or more, still more preferably 100 mgKOH/g or more, and preferably 250 mgKOH/g or less, more preferably 230 mgKOH/g or less, still more preferably 210 mgKOH/g or less.

Also, the glass transition temperature (Tg) of the hydroxyl group-containing acrylic resin (A2) is, from the viewpoint of reducing the VOC content in the resulting coating composition and also adhesiveness of a coating film to be formed to a polycarbonate resin substrate and releasability from a mold, preferably -20°C or higher, more preferably -10°C or higher, still more preferably 0°C or higher, and preferably 70°C or lower, more preferably 60°C or lower, still more preferably 50°C or lower.

Incidentally, in the present description, the glass transition temperature (Tg) of the hydroxyl group-containing acrylic resin (A2) is a value calculated by the following equations. $1 / Tg \left(K\right) = W 1 / T 1 + W 2 / T 2 + … + Wn / Tn$ $Tg \left(°C\right) = Tg \left(K\right) - 273$

In the equations, W1, W2, ..., Wn are the mass fractions of the respective monomers, and T1, T2, ..., Tn are the glass transition temperatures Tg (K) of homopolymers of the respective monomers.

Incidentally, the glass transition temperatures of the homopolymers of the respective monomers are values according to "POLYMER HANDBOOK, Fourth Edition, J. Brandrup, E. H. Immergut, E. A. Grulke (1999)", and, for monomers whose glass transition temperatures are not described in this literature, the glass transition temperature is taken to be the static glass transition temperature of a homopolymer of the monomer synthesized so that the weight average molecular weight becomes approximately 50,000.

In the case where the hydroxyl group-containing acrylic resin (A2) is produced by a solution polymerization method, the polyhydric alcohol that can be used as a solvent is a compound having two or more hydroxyl groups in one molecule. Examples of such polyhydric alcohols include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, tetramethylene glycol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecane dimethanol, hydroxy pivalic acid neopentyl glycol ester, hydrogenated bisphenol A, dimethylol propionic acid and isosorbide; polylactone diols obtained by adding lactone compounds such as ε-caprolactone to these dihydric alcohols; ester diol compounds such as bis(hydroxyethyl) terephthalate; polyether diol compounds such as alkylene oxide adducts of bisphenol A, polyethylene glycol, polypropylene glycol and polytetramethylene glycol; tri- or higher-hydric alcohols such as glycerin, trimethylolethane, trimethylolpropane, diglycerin, triglycerin, 1,2,6-hexanetriol, pentaerythritol, dipentaerythritol, sorbitol and mannitol; polylactone polyol compounds obtained by adding lactone compounds such as ε-caprolactone to these tri- or higher-hydric alcohols; fatty acid esters of glycerin; and arbitrary combinations thereof.

From the viewpoint of reducing the VOC content in the resulting coating composition, the blending amount of the polyhydric alcohol, based on the total amount of the hydroxyl group-containing acrylic resin (A2), is preferably 10 mass % or more, more preferably 20 mass % or more, and still more preferably 30 mass % or more, and is preferably 150 mass % or less, more preferably 130 mass % or less, and still more preferably 100 mass % or less.

The solvent used in the above solution polymerization method can, as needed, contain organic solvents other than the polyhydric alcohol.
Examples of the organic solvents include, for example, aromatic solvents such as toluene, xylene and "Swazol 1000" (trade name, product of Cosmo Oil Co., Ltd., high-boiling petroleum-based solvent); ester solvents such as ethyl acetate, butyl acetate, propyl propionate, butyl propionate, 1-methoxy-2-propyl acetate, 2-ethoxyethyl propionate, 3-methoxybutyl acetate, ethylene glycol ethyl ether acetate and propylene glycol methyl ether acetate; ketone solvents such as methyl ethyl ketone, methyl isobutyl ketone and methyl amyl ketone; and alcohol solvents such as isopropanol, n-butanol, isobutanol and 2-ethylhexanol.

When the hydroxyl group-containing compound (A) comprises the hydroxyl group-containing acrylic resin (A2), a content of the hydroxyl group-containing acrylic resin (A2) is preferably 35 mass % or more, more preferably 37 mass % or more, and still more preferably 40 mass % or more, and preferably 85 mass % or less, more preferably 80 mass % or less, and still more preferably 70 mass % or less, based on the total solids amount of the hydroxyl group-containing compound (A), from the viewpoint of adhesiveness of a coating film to be formed to a polycarbonate resin substrate, releasability from a mold and smoothness, and the like.

### [The hydroxyl group-containing polycaprolactone resin (A3)]

The hydroxyl group-containing compound (A) preferably comprises a hydroxyl group-containing polycaprolactone resin (A3), from the viewpoint of smoothness of a coating film to be formed, and the like.

The hydroxyl group-containing polycaprolactone resin (A3) can be obtained, for example, by ring-opening polymerization of ε-caprolactone using a polyhydric alcohol having a valency of 2 to 4 as an initiator. Examples of the polyhydric alcohol having a valency of 2 or more include ethylene glycol, glycerin, trimethylolethane, trimethylolpropane, diglycerin, ditrimethylolpropane, 1,2,6-hexanetriol, pentaerythritol, polyhydric alcohol compounds obtained by reacting a dimethylolalkanecarboxylic acid with a monoepoxy compound (for example, "Cardura E10P; glycidyl ester of a synthetic highly branched saturated fatty acid" manufactured by Hexion Specialty Chemicals Inc.), and any combination thereof.

It should be noted however, that in the present disclosure, a hydroxyl group-containing compound obtainable by ring-opening polymerization of ε-caprolactone using a polyhydric alcohol having an isocyanurate ring structure as an initiator is not included in the hydroxyl group-containing polycaprolactone resin (A3), but is included in the hydroxyl group-containing compound having an isocyanurate ring structure (A1).

In addition, in the present disclosure, a resin obtained by modifying a hydroxyl group-containing acrylic resin by addition of ε-caprolactone is not included in the hydroxyl group-containing polycaprolactone resin (A3), but is included in the hydroxyl group-containing acrylic resin (A2).

The hydroxyl group-containing polycaprolactone resin (A3) can be a commercially available product. Examples of the commercially available products include, for example, "PLACCEL 205", "PLACCEL 205H", "PLACCEL L205AL", "PLACCEL 205U", "PLACCEL 208", "PLACCEL 210", "PLACCEL 210N", "PLACCEL 210CP", "PLACCEL 212", "PLACCEL L212AL", "PLACCEL 220", "PLACCEL 220N", "PLACCEL 220CPB", "PLACCEL 220CPT", "PLACCEL 220UA", "PLACCEL 220NP1", "PLACCEL L220AL", "PLACCEL 220EB", "PLACCEL 230", "PLACCEL 230N", "PLACCEL 240", "PLACCEL 303", "PLACCEL 305", "PLACCEL 308", "PLACCEL 309", "PLACCEL 312", "PLACCEL 320", "PLACCEL L320AL" and "PLACCEL 410" (all trade names, products of Daicel Corporation); "TONE 0201", "TONE 0230", "TONE 0249", "TONE 0301", "TONE 0305", "TONE 0310", "TONE 1241", "TONE 1278" and "TONE 2221" (all trade names, products of The Dow Chemical Company); and "Capa 2043", "Capa 2101", "Capa 2201", "Capa 2205", "Capa 2209", "Capa 2201A", "Capa 2203A", "Capa 3031", "Capa 3050J", "Capa 3091" and "Capa 4101" (all trade names, products of Ingevity Corporation).

The hydroxyl group-containing polycaprolactone resin (A3) preferably comprises a hydroxyl group-containing polycaprolactone resin (A3') having three or more hydroxyl groups in one molecule, from the viewpoint of smoothness of a coating film to be formed, releasability from a mold, and the like.

Examples of the hydroxyl group-containing polycaprolactone resin (A3') having three or more hydroxyl groups in one molecule include commercially available products. As such commercially available products, mention may be made of, for example, "PLACCEL 303", "PLACCEL 305", "PLACCEL 308", "PLACCEL 309", "PLACCEL 312", "PLACCEL 320", "PLACCEL L320AL" and "PLACCEL 410" (all trade names, products of Daicel Corporation); "TONE 0301", "TONE 0305" and "TONE 0310" (all trade names, products of The Dow Chemical Company); and "Capa 3031", "Capa 3050J", "Capa 3091" and "Capa 4101" (all trade names, products of Ingevity Corporation).

From the viewpoint of reducing the VOC content in the resulting coating composition and smoothness of a coating film to be formed, and the like, the hydroxyl group-containing polycaprolactone resin (A3) preferably has a number-average molecular weight of 280 or more, more preferably 290 or more, and still more preferably 300 or more, and preferably 1000 or less, more preferably 850 or less, and still more preferably 600 or less.

From the viewpoint of releasability of a coating film to be formed from a mold, and the like, the hydroxyl value of the hydroxyl group-containing polycaprolactone resin (A3) is preferably 50 mgKOH/g or more, more preferably 100 mgKOH/g or more, and still more preferably 130 mgKOH/g or more, and preferably 900 mgKOH/g or less, more preferably 750 mgKOH/g or less, and still more preferably 600 mgKOH/g or less.

When the hydroxyl group-containing compound (A) comprises the hydroxyl group-containing polycaprolactone resin (A3), a content of the hydroxyl group-containing polycaprolactone resin (A3) is preferably 4 mass % or more, more preferably 10 mass % or more, and still more preferably 15 mass % or more, and preferably 45 mass % or less, more preferably 40 mass % or less, and still more preferably 35 mass % or less, based on a total solids amount of the hydroxyl group-containing compound (A), from the viewpoint of adhesiveness of a coating film to be formed to a polycarbonate resin substrate, releasability from a mold, smoothness, and the like.

The hydroxyl group-containing polyester resin can usually be produced by an esterification reaction or a transesterification reaction between an acid component and an alcohol component. As the acid component, compounds that are usually used as polycarboxylic acids in producing the hydroxyl group-containing polyester resin can be used. Examples of such polycarboxylic acids include aliphatic polybasic acids, alicyclic polybasic acids, aromatic polybasic acids, and the like.

The alicyclic polybasic acids are generally compounds having one or more alicyclic structures and two or more carboxyl groups in one molecule, acid anhydrides of these compounds, and esterified products of these compounds. The alicyclic structure may mainly be a 4- to 6-membered ring structure. Examples of the alicyclic polybasic acids include alicyclic polycarboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid and 1,3,5-cyclohexanetricarboxylic acid; acid anhydrides of these alicyclic polycarboxylic acids; lower alkyl esters of these alicyclic polycarboxylic acids having 1 to 6 carbon atoms, preferably 1 to 4 carbon atoms; and any combination thereof.

The aliphatic polybasic acids are generally aliphatic compounds having two or more carboxyl groups in one molecule, acid anhydrides of these compounds, and esterified products of these compounds. Examples of the aliphatic polybasic acids include aliphatic polycarboxylic acids such as succinic acid, glutaric acid, adipic acid, pimelic acid, suberic acid, azelaic acid, sebacic acid, undecanedioic acid, dodecanedioic acid, brassylic acid, octadecanedioic acid, citric acid and butanetetracarboxylic acid; acid anhydrides of these aliphatic polycarboxylic acids; lower alkyl esters of these aliphatic polycarboxylic acids having 1 to 6 carbon atoms, preferably 1 to 4 carbon atoms; and any combination thereof.

The aromatic polybasic acids are generally aromatic compounds having two or more carboxyl groups in one molecule, acid anhydrides of these compounds, and esterified products of these compounds. Examples of the aromatic polybasic acids include aromatic polycarboxylic acids such as phthalic acid, isophthalic acid, terephthalic acid, naphthalenedicarboxylic acid, 4,4'-biphenyldicarboxylic acid, trimellitic acid and pyromellitic acid; acid anhydrides of these aromatic polycarboxylic acids; lower alkyl esters of these aromatic polycarboxylic acids having 1 to 6 carbon atoms, preferably 1 to 4 carbon atoms; and any combination thereof.

In addition to the aliphatic polybasic acids, alicyclic polybasic acids and aromatic polybasic acids, other acid components may also be used. Such acid components are not particularly limited, and examples include fatty acids such as coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid and safflower oil fatty acid; monocarboxylic acids such as isononanoic acid, neodecanoic acid, lauric acid, myristic acid, palmitic acid, stearic acid, oleic acid, linoleic acid, linolenic acid, benzoic acid, p-tert-butylbenzoic acid, cyclohexanecarboxylic acid and 10-phenyloctadecanoic acid; hydroxycarboxylic acids such as lactic acid, 3-hydroxybutanoic acid and 3-hydroxy-4-ethoxybenzoic acid; and any combination thereof.

As the alcohol component, polyhydric alcohols having two or more hydroxyl groups in one molecule can be suitably used. Examples of such polyhydric alcohols include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecane dimethanol, hydroxy pivalic acid neopentyl glycol ester, hydrogenated bisphenol A, hydrogenated bisphenol F and dimethylol propionic acid; polylactone diols obtained by adding lactone compounds such as ε-caprolactone to these dihydric alcohols; ester diol compounds such as bis(hydroxyethyl) terephthalate; polyether diol compounds such as alkylene oxide adducts of bisphenol A, polyethylene glycol, polypropylene glycol and polytetramethylene glycol; tri- or higher-hydric alcohols such as glycerin, trimethylolethane, trimethylolpropane, diglycerin, triglycerin, 1,2,6-hexanetriol, pentaerythritol, dipentaerythritol, sorbitol and mannitol; polylactone polyol compounds obtained by adding lactone compounds such as ε-caprolactone to these tri- or higher-hydric alcohols; fatty acid esters of glycerin; and any combination thereof.

In addition to the polyhydric alcohols, alcohol components other than the polyhydric alcohols may also be used. Such alcohol components are not particularly limited, and examples thereof include monohydric alcohols such as methanol, ethanol, propyl alcohol, butyl alcohol, isobutyl alcohol, pentyl alcohol, 2-ethylhexyl alcohol, stearyl alcohol, benzyl alcohol, phenethyl alcohol and 2-phenoxyethanol; alcohol compounds obtained by reacting acids with monoepoxy compounds such as propylene oxide, butylene oxide and "CARDURA E10P" (trade name, manufactured by Hexion Inc., glycidyl ester of a synthetic highly branched saturated fatty acid); and any combination thereof.

A method for producing the hydroxyl group-containing polyester resin is not particularly limited, and can be carried out according to conventional methods. For example, a hydroxyl group-containing polyester polyol resin can be produced by heating the above acid component and the above alcohol component under a nitrogen stream at approximately 150 to 250°C for about 5 to 10 hours to carry out an esterification reaction or a transesterification reaction between the acid component and the alcohol component.

In carrying out the esterification reaction or the transesterification reaction between the above acid component and the above alcohol component, these components may be added to a reaction vessel at once, or one or both of them may be added in several portions. Further, after first synthesizing the hydroxyl group-containing polyester resin, an acid anhydride may be reacted with the obtained hydroxyl group-containing polyester resin to half-esterify it, thereby providing a polyester resin containing carboxyl groups and hydroxyl groups. Alternatively, a polyester resin containing carboxyl groups may first be synthesized, and then the above alcohol component may be added thereto to produce the hydroxyl group-containing polyester resin.

In the esterification or transesterification reaction, a catalyst for promoting the reaction may be used, and examples of such catalysts include known catalysts such as dibutyltin oxide, antimony trioxide, zinc acetate, manganese acetate, cobalt acetate, calcium acetate, lead acetate, tetrabutyl titanate and tetraisopropyl titanate.

Also, the hydroxyl group-containing polyester resin can be modified, during or after production of the resin, with fatty acids, monoepoxy compounds or polyisocyanate compounds. Examples of the fatty acids include coconut oil fatty acid, cottonseed oil fatty acid, hempseed oil fatty acid, rice bran oil fatty acid, fish oil fatty acid, tall oil fatty acid, soybean oil fatty acid, linseed oil fatty acid, tung oil fatty acid, rapeseed oil fatty acid, castor oil fatty acid, dehydrated castor oil fatty acid and safflower oil fatty acid. Examples of the monoepoxy compounds include "CARDURA E10P" (trade name, manufactured by Hexion Inc., glycidyl ester of a synthetic highly branched saturated fatty acid).

Examples of the polyisocyanate compound include aliphatic diisocyanate compounds such as lysine diisocyanate, hexamethylene diisocyanate and trimethylhexane diisocyanate; alicyclic diisocyanate compounds such as hydrogenated xylylene diisocyanate, isophorone diisocyanate, methylcyclohexane-2,4-diisocyanate, methylcyclohexane-2,6-diisocyanate, 4,4'-methylenebis(cyclohexyl isocyanate), 1,3-(isocyanatomethyl)cyclohexane and 1,4-(isocyanatomethyl)cyclohexane; aromatic diisocyanate compounds such as tolylene diisocyanate, xylylene diisocyanate, tetramethylxylylene diisocyanate and diphenylmethane diisocyanate; organic polyisocyanates per se such as polyisocyanates having a functionality of three or more, including lysine triisocyanate and 4-(isocyanatomethyl)octamethylene diisocyanate; adducts of any of these organic polyisocyanates with polyhydric alcohols, low-molecular-weight polyester resins or water; cyclic polymers (for example, isocyanurates) of these organic polyisocyanates with one another; biuret-type adducts; and any combination thereof.

The number-average molecular weight of the hydroxyl group-containing polyester resin is, from the viewpoint of reducing the VOC content in the resulting coating composition and releasability of a coating film to be formed from a mold, preferably 300 or more, more preferably 400 or more, still more preferably 450 or more, and preferably 1000 or less, more preferably 850 or less, still more preferably 600 or less.

The hydroxyl value of the hydroxyl group-containing polyester resin is, from the viewpoint of adhesiveness of a coating film to be formed to a polycarbonate resin substrate and releasability from a mold, preferably 20 mgKOH/g or more, more preferably 100 mgKOH/g or more, still more preferably 300 mgKOH/g or more, and preferably 600 mgKOH/g or less, more preferably 580 mgKOH/g or less, still more preferably 560 mgKOH/g or less.

The glass transition temperature (Tg) of the hydroxyl group-containing polyester resin is, from the viewpoint of adhesiveness of a coating film to be formed to a polycarbonate resin substrate and releasability from a mold, preferably -80°C or higher, more preferably -70°C or higher, still more preferably -60°C or higher, and preferably 10°C or lower, more preferably 5°C or lower, still more preferably 0°C or lower.

The glass transition temperature can be measured, for example, by using a differential scanning calorimeter "DSC-50Q" (trade name, manufactured by Shimadzu Corporation), taking a sample in a measuring cup, completely removing the solvent by vacuum suction, and then measuring changes in heat quantity in a temperature range of from -100°C to 150°C at a heating rate of 3°C/min, and defining the first point of change in the baseline on the low-temperature side as the static glass transition temperature.

When the hydroxyl group-containing compound (A) comprises a hydroxyl group-containing polyester resin, a content of the hydroxyl group-containing polyester resin is, from the viewpoint of reducing the VOC content in the resulting coating composition and adhesiveness of a coating film to be formed to a polycarbonate resin substrate and releasability from a mold, preferably 5 mass% or more, more preferably 10 mass% or more, still more preferably 15 mass% or more, and preferably 95 mass% or less, more preferably 80 mass% or less, still more preferably 70 mass% or less, based on a total solids amount of the hydroxyl group-containing compound (A).

As the hydroxyl group-containing polyether resin, alkylene oxide adducts of hydroxyl group-containing monomers described below, ring-opening (co)polymers of alkylene oxides or cyclic ethers (such as tetrahydrofuran), and the like can be used. Specific examples include polyethylene glycol, polypropylene glycol, polytetramethylene glycol, block or random copolymers of ethylene glycol and propylene glycol, polyhexamethylene glycol, polyoctamethylene glycol, and any combination thereof.

The number-average molecular weight of the hydroxyl group-containing polyether resin is, from the viewpoint of reducing the VOC content in the resulting coating composition and adhesiveness of a coating film to be formed to a polycarbonate resin substrate and releasability from a mold, preferably 300 or more, more preferably 350 or more, still more preferably 400 or more, and preferably 1000 or less, more preferably 850 or less, still more preferably 600 or less.

The hydroxyl value of the hydroxyl group-containing polyether resin is, from the viewpoint of adhesiveness of a coating film to be formed to a polycarbonate resin substrate and releasability from a mold, preferably 50 mgKOH/g or more, more preferably 70 mgKOH/g or more, still more preferably 90 mgKOH/g or more, and preferably 600 mgKOH/g or less, more preferably 500 mgKOH/g or less, still more preferably 400 mgKOH/g or less.

When the hydroxyl group-containing compound (A) comprises a hydroxyl group-containing polyether resin, a content of the hydroxyl group-containing polyether resin is, from the viewpoint of reducing the VOC content in the resulting coating composition and adhesiveness of a coating film to be formed to a polycarbonate resin substrate, preferably 5 mass% or more, more preferably 10 mass% or more, and preferably 95 mass% or less, more preferably 50 mass% or less, still more preferably 25 mass% or less, based on a total solids amount of the hydroxyl group-containing compound (A).

The hydroxyl group-containing polycarbonate resin is a compound obtained, by a conventional method, by subjecting known polyol components and a carbonylating agent to a polycondensation reaction. As the polyol components, mention may be made of diol components and polyhydric alcohol components such as tri- or higher-hydric alcohols.

As the diol components, examples include linear diols such as 1,3-propanediol, 1,4-butanediol, 1,5-pentanediol, 1,6-hexanediol, 1,7-heptanediol, 1,8-octanediol, 1,9-nonanediol and 1,10-decanediol; branched diols such as 2-methyl-1,3-propanediol, 3-methyl-1,5-pentanediol, neopentyl glycol, 2-ethyl-1,6-hexanediol, 2,2-diethyl-1,3-propanediol, 2-butyl-2-ethyl-1,3-propanediol, 2-methyl-1,8-octanediol, 2,2,4-trimethyl-1,3-pentanediol and 2-ethyl-1,3-hexanediol; alicyclic diols such as 1,3-cyclohexanediol, 1,4-cyclohexanediol, 1,4-cyclohexanedimethanol and 2,2,4,4-tetramethyl-1,3-cyclobutanediol; aromatic diols such as p-xylylenediol and p-tetrachloro-xylylenediol; ether-type diols such as diethylene glycol and dipropylene glycol; polylactone diols obtained by adding lactone compounds such as ε-caprolactone to these diol components; and any combination thereof.

As the tri- or higher-hydric alcohols, examples include glycerin, trimethylolethane, trimethylolpropane, a dimer of trimethylolpropane and pentaerythritol; polylactone polyols obtained by adding lactone compounds such as ε-caprolactone to these tri- or higher-hydric alcohols; and any combination thereof.

As the carbonylating agent, any known agent can be used. Specific examples include alkylene carbonates, dialkyl carbonates, diaryl carbonates, phosgene, and any combination thereof. Among these, preferred examples include ethylene carbonate, propylene carbonate, dimethyl carbonate, diethyl carbonate, dibutyl carbonate, and diphenyl carbonate.

The number-average molecular weight of the hydroxyl group-containing polycarbonate resin is, from the viewpoint of reducing the VOC content in the resulting coating composition and adhesiveness of a coating film to be formed to a polycarbonate resin substrate and releasability from a mold, preferably 300 or more, more preferably 400 or more, still more preferably 450 or more, and preferably 2000 or less, more preferably 1000 or less, still more preferably 900 or less.

The hydroxyl value of the hydroxyl group-containing polycarbonate resin is, from the viewpoint of adhesiveness of a coating film to be formed to a polycarbonate resin substrate and releasability from a mold, preferably 40 mgKOH/g or more, more preferably 70 mgKOH/g or more, still more preferably 90 mgKOH/g or more, and preferably 300 mgKOH/g or less, more preferably 250 mgKOH/g or less, still more preferably 200 mgKOH/g or less.

When the hydroxyl group-containing compound (A) comprises a hydroxyl group-containing polycarbonate resin, a content of the hydroxyl group-containing polycarbonate resin is, from the viewpoint of adhesiveness of a coating film to be formed to a polycarbonate resin substrate and releasability from a mold, preferably 5 mass% or more, more preferably 10 mass% or more, still more preferably 20 mass% or more, and preferably 95 mass% or less, more preferably 80 mass% or less, still more preferably 70 mass% or less, based on a total solids amount of the hydroxyl group-containing compound (A).

Further, the hydroxyl group-containing compound (A) can contain a hydroxyl group-containing monomer. Examples of the hydroxyl group-containing monomer include ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecane dimethanol, hydroxy pivalic acid neopentyl glycol ester, hydrogenated bisphenol A, hydrogenated bisphenol F, glycerin, trimethylolethane, trimethylolpropane, diglycerin, triglycerin, 1,2,6-hexanetriol, pentaerythritol, dipentaerythritol, sorbitol, mannitol, hydroxyacetone, 4-(2-hydroxyethyl)morpholine, benzyl alcohol, 2-phenylethanol, 2-phenoxyethanol, naphthalen-1-ol, (1,3-benzodioxol-5-yl)methanol, nonylphenol, dinonylphenol, nonylphenol ethoxylate, monostyrenated phenol, distyrenated phenol, tristyrenated phenol, and any combination thereof.

When the hydroxyl group-containing compound (A) comprises the hydroxyl group-containing monomer, a content of the hydroxyl group-containing monomer is, from the viewpoint of adhesiveness of a coating film to be formed to a polycarbonate resin substrate and releasability from a mold, preferably in a range of from 5 to 60 mass%, more preferably in a range of from 5 to 40 mass%, and still more preferably in a range of from 5 to 30 mass%, based on a total solids amount of the hydroxyl group-containing compound (A).

In the coating composition according to the present disclosure, a content of the hydroxyl group-containing compound (A) is, from the viewpoint of reducing the VOC content in the resulting coating composition and also adhesiveness of a coating film to be formed to a polycarbonate resin substrate and releasability from a mold, preferably 15 mass% or more, more preferably 20 mass% or more, still more preferably 25 mass% or more, and preferably 80 mass% or less, more preferably 70 mass% or less, still more preferably 50 mass% or less, based on a total amount of the coating composition.

### [The polyisocyanate compound (B)]

The polyisocyanate compound (B) is a compound having at least two isocyanate groups in one molecule, and examples thereof include aliphatic polyisocyanates, alicyclic polyisocyanates, aromatic aliphatic polyisocyanates, aromatic polyisocyanates, and derivatives of these polyisocyanates.

As the aliphatic polyisocyanate, examples include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and 2,6-diisocyanatohexanoic acid methyl (commonly known as lysine diisocyanate); and aliphatic triisocyanates such as 2,6-diisocyanatohexanoic acid 2-isocyanatoethyl, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

As the alicyclic polyisocyanate, examples include alicyclic diisocyanates such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (commonly known as isophorone diisocyanate), methyl-2,4-cyclohexane diisocyanate, methyl-2,6-cyclohexane diisocyanate, 1,3- or 1,4-bis(isocyanatomethyl)cyclohexane (commonly known as hydrogenated xylene diisocyanate) or a mixture thereof, norbornane diisocyanate; and alicyclic triisocyanates such as 1,3,5-triisocyanatocyclohexane, 1,3,5-trimethylisocyanatocyclohexane, 2-(3-isocyanatopropyl)-2,5-di(isocyanatomethyl)bicyclo(2.2.1)heptane, 2-(3-isocyanatopropyl)-2,6-di(isocyanatomethyl)bicyclo(2.2.1)heptane, 3-(3-isocyanatopropyl)-2,5-di(isocyanatomethyl)bicyclo(2.2.1)heptane, 5-(2-isocyanatoethyl)-2-isocyanatomethyl-3-(3-isocyanatopropyl)bicyclo(2.2.1)heptane, 6-(2-isocyanatoethyl)-2-isocyanatomethyl-3-(3-isocyanatopropyl)bicyclo(2.2.1)heptane, 5-(2-isocyanatoethyl)-2-isocyanatomethyl-2-(3-isocyanatopropyl)bicyclo(2.2.1)heptane, and 6-(2-isocyanatoethyl)-2-isocyanatomethyl-2-(3-isocyanatopropyl)bicyclo(2.2.1)heptane.

As the aromatic aliphatic polyisocyanate, examples include aromatic aliphatic diisocyanates such as 1,3- or 1,4-xylene diisocyanate or a mixture thereof, ω,ω'-diisocyanato-1,4-diethylbenzene, and 1,3- or 1,4-bis(1-isocyanato-1-methylethyl)benzene (commonly known as tetramethyl xylene diisocyanate) or a mixture thereof; and aromatic aliphatic triisocyanates such as 1,3,5-triisocyanatomethylbenzene.

As the aromatic polyisocyanate, examples include aromatic diisocyanates such as m-phenylenediisocyanate, p-phenylenediisocyanate, 4,4'-diphenyldiisocyanate, 1,5-naphthalene diisocyanate, 2,4'- or 4,4'-diphenylmethane diisocyanate or a mixture thereof, 2,4- or 2,6-toluene diisocyanate or a mixture thereof, 4,4'-toluidine diisocyanate, and 4,4'-diphenyl ether diisocyanate; aromatic triisocyanates such as triphenylmethane-4,4',4"-triisocyanate, 1,3,5-triisocyanatobenzene, and 2,4,6-triisocyanatotoluene; and aromatic tetraisocyanates such as 4,4'-diphenylmethane-2,2',5,5'-tetraisocyanate.
Examples of derivatives of the polyisocyanate compound include, for example, dimers, trimers, biurets, allophanates, uretdiones, uretonimines, isocyanurates, iminooxadiazinediones of the above polyisocyanate compounds, polymethylene polyphenyl polyisocyanate (crude MDI, polymeric MDI), crude TDI, and the like.

The above polyisocyanates and derivatives thereof may each be used alone or in combination of two or more. Among these polyisocyanates, it is preferable to use aliphatic diisocyanates, aliphatic triisocyanates, alicyclic diisocyanates, aromatic aliphatic diisocyanates and derivatives thereof, each alone or in combination of two or more.

As the polyisocyanate compound (B), it is also possible to use a prepolymer obtained by reacting the above polyisocyanate or a derivative thereof with a compound capable of reacting with the polyisocyanate under conditions in which isocyanate groups are in excess. Examples of the compound capable of reacting with the polyisocyanate include compounds having an active hydrogen group such as a hydroxyl group or an amino group; specifically, for example, polyhydric alcohols, low-molecular-weight polyester resins, amines and water can be used. As the polyhydric alcohol, the polyhydric alcohols described in the section on the hydroxyl group-containing polyester resin can be used.

The polyisocyanate compound (B) is used so that, from the viewpoint of adhesion of a coating film to be formed to a polycarbonate resin substrate and releasability from a mold, a ratio of isocyanate groups in the polyisocyanate compound (B) to hydroxyl groups in the hydroxyl group-containing compound (A) is preferably 0.7 or more, more preferably 0.9 or more, and preferably 2.0 or less, more preferably 1.5 or less.

Further, in the coating composition according to the present disclosure, a content of the polyisocyanate compound (B) is, from the viewpoint of adhesion of a coating film to be formed to a polycarbonate resin substrate and releasability from a mold, preferably 10 mass % or more, more preferably 20 mass % or more, and still more preferably 30 mass % or more, based on a total amount of the coating composition, and preferably 80 mass % or less, more preferably 75 mass % or less, and still more preferably 70 mass % or less.

### [The curing catalyst (C)]

The coating composition according to the present disclosure comprises a curing catalyst (C). By the coating composition according to the present disclosure comprising the curing catalyst (C), releasability of a coating film to be formed from a mold can be improved.

Examples of the curing catalyst (C) include organometallic compounds such as stannous octoate, dibutyltin diacetate, dibutyltin di(2-ethylhexanoate), dibutyltin dilaurate, dioctyltin diacetate, dioctyltin di(2-ethylhexanoate), dioctyltin dineodecanoate, dioctyltin diversatate, dibutyltin oxide, dibutyltin sulfide, dioctyltin oxide, dibutyltin fatty acid salts, lead 2-ethylhexanoate, zinc octoate, zinc naphthenate, zinc fatty acid salts, bismuth octoate, bismuth 2-ethylhexanoate, bismuth oleate, bismuth neodecanoate, bismuth versatate, bismuth naphthenate, cobalt naphthenate, calcium octoate, copper naphthenate, tetra(2-ethylhexyl)titanate, tetra(n-butyl)titanate, titanium diisopropoxy bis(acetylacetonate), titanium tetraacetylacetonate, titanium diisopropoxy bis(ethyl acetoacetate), titanium butoxide dimer, zirconium tetra-n-propoxide, zirconium tetra-n-butoxide, zirconium tetraacetylacetonate and zirconium tributoxy monoacetylacetonate; tertiary amine compounds such as triethylamine, N,N'-dimethylcyclohexylamine, N,N,N',N'-tetramethylethylenediamine, N,N,N',N'-tetramethylhexamethylenediamine, N,N,N',N",N‴-pentamethyldiethylenetriamine, N,N,N',N",N‴-pentamethyldipropylenetriamine, 1,4-diazabicyclo[2.2.2]octane (DABCO), 1,8-diazabicyclo[5.4.0]-7-undecene (DBU), 1,5-diazabicyclo[4.3.0]-5-nonene (DBN), N-methyl-N'-(2-dimethylaminoethyl)piperazine, N-ethylmorpholine, 1,2-dimethylimidazole, dimethylethanolamine, dimethylaminoethoxyethanol, N-methyl-N'-(2-hydroxyethyl)piperazine, 2-hydroxyethyl-1,4-diazabicyclo[2.2.2]octane, 1,1'-{[3-(dimethylamino)propyl]imino}bis(2-propanol), bis(2-dimethylaminoethyl) ether and bis(2-morpholinoethyl) ether, and neutralization salts of the tertiary amine compounds; quaternary ammonium salts such as carboxylates of tetraalkylammonium, tetraarylammonium and alkylarylammonium, and halides of tetraalkylammonium, tetraarylammonium and alkylarylammonium; and arbitrary combinations thereof.

From the viewpoint of releasability of a coating film to be formed from a mold, it is preferable that the coating composition according to the present disclosure comprises, as the curing catalyst (C), at least one curing catalyst selected from the group consisting of dioctyltin diversatate, dibutyltin dilaurate, dioctyltin diacetate, dioctyltin dineodecanoate, zinc octoate, zinc naphthenate, zinc fatty acid salts, bismuth octoate, bismuth 2-ethylhexanoate, bismuth oleate, bismuth neodecanoate, bismuth versatate, bismuth naphthenate, tetra(2-ethylhexyl)titanate, tetra(n-butyl)titanate, titanium diisopropoxy bis(acetylacetonate), titanium tetraacetylacetonate, titanium diisopropoxy bis(ethyl acetoacetate), titanium butoxide dimer, zirconium tetra-n-propoxide, zirconium tetra-n-butoxide, zirconium tetraacetylacetonate, zirconium tributoxy monoacetylacetonate, 1,4-diazabicyclo[2.2.2]octane (DABCO), 1,8-diazabicyclo[5.4.0]-7-undecene (DBU) and 1,5-diazabicyclo[4.3.0]-5-nonene (DBN); it is more preferable that the coating composition comprises at least one curing catalyst selected from the group consisting of dioctyltin diversatate, dibutyltin dilaurate, dioctyltin diacetate, dioctyltin dineodecanoate, zinc octoate, zinc naphthenate, zinc fatty acid salts, zirconium tetra-n-propoxide, zirconium tetra-n-butoxide, zirconium tetraacetylacetonate, zirconium tributoxy monoacetylacetonate, 1,4-diazabicyclo[2.2.2]octane (DABCO), 1,8-diazabicyclo[5.4.0]-7-undecene (DBU) and 1,5-diazabicyclo[4.3.0]-5-nonene (DBN); and it is still more preferable that the coating composition comprises at least one curing catalyst selected from the group consisting of dioctyltin diversatate, dibutyltin dilaurate, dioctyltin diacetate and dioctyltin dineodecanoate.

A content of the curing catalyst (C), from the viewpoint of releasability of a coating film to be formed from a mold, smoothness and the like, is, based on a total amount of the coating composition, preferably 0.1 mass % or more, more preferably 0.2 mass % or more, and preferably 2.0 mass % or less, more preferably 1.5 mass % or less.

### [The dehydrating agent (D)]

The coating composition according to the present disclosure preferably comprises a dehydrating agent (D), from the viewpoint of smoothness of a coating film to be formed.

As the dehydrating agent (D), at least one dehydrating agent selected from inorganic dehydrating agents and organic dehydrating agents can be used.

Examples of the inorganic dehydrating agents include calcium compounds such as calcium hydride, calcium oxide (quicklime), calcium chloride and calcium sulfate (gypsum); barium compounds such as barium oxide; magnesium compounds such as magnesium sulfate; sodium compounds such as sodium sulfate and sodium carbonate; copper compounds such as copper sulfate; inorganic silicon compounds such as silica gel; aluminum compounds such as aluminum oxide (hydraulic alumina, lithium aluminum hydride, amorphous silica-alumina and crystalline aluminosilicate (molecular sieve)); and arbitrary combinations thereof.

Examples of the organic dehydrating agents include ortho formic acid alkyl esters; ortho acetic acid alkyl esters; ortho boric acid alkyl esters; vinylsilanes; alkoxysilane compounds; monoisocyanate compounds; aliphatic acid anhydrides such as acetic anhydride; aromatic acid anhydrides such as benzoic anhydride; and arbitrary combinations thereof.

When the coating composition according to the present disclosure comprises the dehydrating agent (D), from the viewpoint of releasability of a coating film to be formed from a mold, smoothness, and the like, a content of the dehydrating agent (D), based on a total amount of the coating composition, is preferably 0.1 mass % or more, more preferably 0.3 mass % or more, and preferably 3.0 mass % or less, more preferably 2.5 mass % or less.

### [The internal mold release agent (E)]

When the coating composition according to the present disclosure is used as an in-mold coating composition, it is preferable that the coating composition comprises an internal mold release agent (E), from the viewpoint of releasability of a coating film to be formed from a mold, and the like. Examples of the internal mold release agent (E) include: saturated fatty acids such as stearic acid and palmitic acid; saturated fatty acid salts such as zinc stearate, aluminum stearate, magnesium stearate, calcium stearate, sodium stearate, potassium stearate, barium stearate, zinc palmitate, aluminum palmitate, magnesium palmitate, calcium palmitate and sodium palmitate; saturated fatty acid amides such as lauramide, myristamide, palmitamide, stearamide, N,N-dimethyllauramide, N,N-dimethylmyristamide, N,N-dimethylpalmitamide, N,N-dimethylstearamide, N,N-diethyllauramide, N,N-diethylmyristamide, N,N-diethylpalmitamide and N,N-diethylstearamide; unsaturated fatty acids such as palmitoleic acid and oleic acid; unsaturated fatty acid salts such as zinc palmitoleate, aluminum palmitoleate, magnesium palmitoleate, calcium palmitoleate, sodium palmitoleate, potassium palmitoleate, barium palmitoleate, zinc oleate, aluminum oleate, magnesium oleate, calcium oleate, sodium oleate, potassium oleate and barium oleate; unsaturated fatty acid amides such as palmitoleamide, oleamide, erucamide, behenamide, N-oleylpalmitamide, N-stearylerucamide, N,N-dimethyloleamide and N,N-diethyloleamide; nonionic surfactants such as polyoxyethylene alkyl ethers and sorbitan alkyl esters; fluorine-containing compounds such as polytetrafluoroethylene, fluoro polyethers, perfluoroalkyl esters and perfluoroalkyl ester salts; phosphate ester compounds such as phosphate monoesters and/or phosphate diesters having an alkyl chain or an oxyethylene chain; fatty acid esters such as stearic acid monoglyceride, stearic acid diglyceride, stearic acid triglyceride, stearic acid monosorbite, stearyl stearate, palmitic acid monoglyceride, palmitic acid diglyceride, palmitic acid triglyceride, behenic acid monoglyceride, behenic acid diglyceride, behenic acid triglyceride, behenyl behenate, pentaerythritol monostearate, pentaerythritol tetrastearate, pentaerythritol tetrapelargonate, propylene glycol monostearate, stearyl stearate, palmitic acid palmitate, methyl stearate, butyl stearate, methyl laurate, methyl palmitate, isopropyl palmitate, biphenyl biphenate, sorbitan monostearate and 2-ethylhexyl stearate; soybean lecithin, silicone oils and fatty acid alcohol dibasic acid esters; and arbitrary combinations thereof.

As the internal mold release agent (E), from the viewpoint of adhesiveness of a coating film to be formed to a polycarbonate resin substrate, releasability from a mold, and the like, it is preferable that the internal mold release agent (E) comprises a fatty acid amide, more preferably a tertiary fatty acid amide, and still more preferably a tertiary dimethyl fatty acid amide.

Examples of the fatty acid amides include: saturated fatty acid amides such as lauramide, myristamide, palmitamide, stearamide, N,N-dimethyllauramide, N,N-dimethylmyristamide, N,N-dimethylpalmitamide, N,N-dimethylstearamide, N,N-diethyllauramide, N,N-diethylmyristamide, N,N-diethylpalmitamide and N,N-diethylstearamide; and unsaturated fatty acid amides such as palmitoleamide, oleamide, erucamide, behenamide, N-oleylpalmitamide, N-stearylerucamide, N,N-dimethyloleamide and N,N-diethyloleamide.

As the internal mold release agent containing the fatty acid amide, commercial products can be used. Examples of such commercial products include "INT-120IMC" (trade name, manufactured by AXEL PLASTICS), "Amide AP-1", "Diamid Y", "Diamid O-200", "Diamid I-200" (trade names, manufactured by Mitsubishi Chemical Corporation), "Neutron", "Neutron-2", "NeutronS", "Neutron BNT-22H", "Neutron PNT-34", "Neutron SNT-F" (trade names, Nihon Seika Co., Ltd.), "Alflow S-10", "Alflow E-10", "Alflow P-10" (trade names, manufactured by NOF CORPORATION), "Armoslip CP Powder", "Armoslip HT Powder", "Armoslip E" (trade names, manufactured by Lion Specialty Chemicals Co., Ltd.), and "Fatty Acid Amide S", "Fatty Acid Amide O-N", and "Fatty Acid Amide E" (trade names, manufactured by Kao Corporation).

When the internal mold release agent (E) comprises the fatty acid amide, a content of the fatty acid amide is, from the viewpoint of adhesiveness of a coating film to be formed to a polycarbonate resin substrate, releasability from a mold, and the like, preferably from 30 to 100 mass %, more preferably from 50 to 100 mass %, and still more preferably from 70 to 100 mass %, based on a total amount of the internal mold release agent (E).

Examples of the tertiary fatty acid amides include N,N-dimethyllauramide, N,N-dimethylmyristamide, N,N-dimethylpalmitamide, N,N-dimethylstearamide, N,N-diethyllauramide, N,N-diethylmyristamide, N,N-diethylpalmitamide, N,N-diethylstearamide and N,N-dimethyloleamide.
As the internal mold release agent containing the tertiary fatty acid amide, commercial products can be used. Examples of such commercial products include "INT-120IMC" (trade name, manufactured by AXEL PLASTICS).

When the internal mold release agent (E) comprises the tertiary fatty acid amide, a content of the tertiary fatty acid amide is, from the viewpoint of adhesiveness of a coating film to be formed to a polycarbonate resin substrate, releasability from a mold, and the like, preferably from 20 to 100 mass %, more preferably from 35 to 100 mass %, and still more preferably from 50 to 100 mass %, based on a total amount of the internal mold release agent (E).
Examples of the tertiary dimethyl fatty acid amides include N,N-dimethyllauramide, N,N-dimethylmyristamide, N,N-dimethylpalmitamide, N,N-dimethylstearamide and N,N-dimethyloleamide.
As the internal mold release agent containing the tertiary dimethyl fatty acid amide, commercial products can be used. Examples of such commercial products include "INT-120IMC" (trade name, manufactured by AXEL PLASTICS).

When the internal mold release agent (E) comprises the tertiary dimethyl fatty acid amide, a content of the tertiary dimethyl fatty acid amide is, from the viewpoint of adhesiveness of a coating film to be formed to a polycarbonate resin substrate, releasability from a mold and the like, preferably from 20 to 100 mass %, more preferably from 35 to 100 mass %, and still more preferably from 50 to 100 mass %, based on a total amount of the internal mold release agent (E).

When the in-mold coating composition according to the present disclosure comprises the internal mold release agent (E), a content of the internal mold release agent (E) is, from the viewpoint of adhesiveness of a coating film to be formed to a polycarbonate resin substrate, releasability from a mold, and the like, preferably 0.12 mass % or more, more preferably 0.15 mass % or more, and still more preferably 0.18 mass % or more, and preferably 2.0 mass % or less, more preferably 1.5 mass % or less, and still more preferably 1.0 mass % or less, based on a total amount of the in-mold coating composition.

### [Other components]

The coating composition according to the present disclosure may, in addition to the foregoing components, further contain an ultraviolet absorber and/or a light stabilizer. The coating composition may also, as needed, suitably contain other additive components which are usually used in the field of coating, such as a crosslinking agent, a solvent (organic solvent or water), pigments, antioxidants, surface-controlling agents, defoaming agents, emulsifiers, surfactants, antifouling agents, wetting agents, thickeners, dyes, scratch resistance-improving agents and gloss adjusters.

### <The ultraviolet absorber>

As the ultraviolet absorber, conventionally known materials can be used. Examples of the ultraviolet absorbers include benzotriazole-type absorbers, triazine-type absorbers, salicylic acid derivative-type absorbers and benzophenone-type absorbers. Furthermore, the ultraviolet absorber may have a polymerizable unsaturated group.

Examples of the benzotriazole-type absorbers include 2-(2'-hydroxy-5'-methylphenyl)benzotriazole, 2-(2'-hydroxy-5'-t-butylphenyl)benzotriazole, 2-(2'-hydroxy-3',5'-di-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amylphenyl)benzotriazole, 2-(2'-hydroxy-4'-octoxyphenyl)benzotriazole, 2-{2'-hydroxy-3'-(3'',4'',5'',6''-tetrahydrophthalimidomethyl)-5'-methylphenyl}benzotriazole, 2-[2-hydroxy-5-[2-(methacryloyloxy)ethyl]phenyl]-2H-benzotriazole, and the like.

Examples of the triazine-type absorbers include 2,4-bis(2,4-dimethylphenyl)-6-(2-hydroxy-4-iso-octyloxyphenyl)-1,3,5-triazine, 2-[4-((2-hydroxy-3-dodecyloxypropyl)-oxy)-2-hydroxyphenyl]-4,6-bis(2,4-dimethylphenyl)-1,3,5-triazine, 2-[4-((2-hydroxy-3-tridecyloxypropyl)-oxy)-2-hydroxyphenyl]-4,6-bis(2,4-dimethylphenyl)-1,3,5-triazine, 2-(2,4-dihydroxyphenyl)-4,6-bis(2,4-dimethylphenyl)-1,3,5-triazine, and the like.

Examples of the salicylic acid derivative-type absorbers include phenyl salicylate, p-octylphenyl salicylate, 4-tert-butylphenyl salicylate, and the like.

Examples of the benzophenone-type absorbers include 4-dihydroxybenzophenone, 2-hydroxy-4-methoxybenzophenone, 2,2'-dihydroxy-4-methoxybenzophenone, 2-hydroxy-4-methoxy-2'-carboxybenzophenone, 2-hydroxy-4-methoxy-5-sulfobenzophenone trihydrate, 2,2'-dihydroxy-4,4'-dimethoxybenzophenone, 2-hydroxy-4-octoxybenzophenone, 2-hydroxy-4-octadecyloxybenzophenone, sodium 2,2'-dihydroxy-4,4'-dimethoxy-5-sulfobenzophenone, 2,2',4,4'-tetrahydroxybenzophenone, 4-dodecyloxy-2-hydroxybenzophenone, 5-chloro-2-hydroxybenzophenone, resorcinol monobenzoate, 2,4-dibenzoylresorcinol, 4,6-dibenzoylresorcinol, hydroxydodecylbenzophenone, 2,2'-dihydroxy-4-(3-methacryloxy-2-hydroxypropoxy)benzophenone, and the like.

Examples of commercially available products of the ultraviolet absorber include "TINUVIN 1130," "TINUVIN 900," "TINUVIN 928," "TINUVIN 384-2," "TINUVIN 479," "TINUVIN 477," "TINUVIN 405" and "TINUVIN 400" (trade names, manufactured by BASF; TINUVIN is a registered trademark), "RUV A 93" (trade name, manufactured by Otsuka Chemical Co., Ltd.), and the like.

When the coating composition according to the present disclosure contains the ultraviolet absorber, a content of the ultraviolet absorber is, from the viewpoint of weather resistance of a coating film to be formed and the like, preferably 0.1 mass % or more, more preferably 0.2 mass % or more, and even more preferably 0.3 mass % or more, and preferably 10 mass % or less, more preferably 5.0 mass % or less, and even more preferably 3.0 mass % or less, based on a total amount of the coating composition.

### <The light stabilizer>

The light stabilizer is used as a radical chain inhibitor which captures active radical species generated during a degradation process of a coating film. Examples thereof include light stabilizers of hindered amine compounds.

Examples of the hindered amine compounds include monomer-type compounds such as bis(1,2,2,6,6-pentamethyl-4-piperidyl) sebacate, bis(2,2,6,6-tetramethyl-4-piperidyl) sebacate, bis(N-methyl-2,2,6,6-tetramethyl-4-piperidyl) sebacate, 4-benzoyloxy-2,2',6,6'-tetramethylpiperidine, and bis(1,2,2,6,6-pentamethyl-4-piperidyl){[3,5-bis(1,1-dimethylethyl)-4-hydroxyphenyl]methyl} butyl malonate; oligomer-type compounds such as poly{[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino]}; and polyester-bond type compounds such as a polyester of 4-hydroxy-2,2,6,6-tetramethyl-1-piperidineethanol with succinic acid. However, the hindered amine compounds are not limited to these examples. As the light stabilizer, it is also possible to use known polymerizable light stabilizers.

Examples of commercially available products of the light stabilizer include "TINUVIN 123", "TINUVIN 152", "TINUVIN 249" and "TINUVIN 292" (trade names, manufactured by BASF; TINUVIN is a registered trademark), "HOSTAVIN 3058" (trade name, manufactured by Clariant; Hostavin is a registered trademark), "Adeka Stab LA-82" (trade name, manufactured by ADEKA Corporation; Adeka Stab is a registered trademark), and the like.

When the coating composition according to the present disclosure contains the above light stabilizer, a content of the light stabilizer is, from the viewpoint of weather resistance of a coating film to be formed and the like, preferably 0.1 mass % or more, more preferably 0.2 mass % or more, and even more preferably 0.3 mass % or more, and is preferably 10 mass % or less, more preferably 7.5 mass % or less, and even more preferably 5.0 mass % or less, based on a total amount of the coating composition.

### <The solvent>

As the solvent, for example, organic solvents and water can be used. Examples of the organic solvent include: ketone solvents such as acetone, methyl ethyl ketone and methyl isobutyl ketone; ester solvents such as ethyl acetate, butyl acetate, methyl benzoate, ethoxypropionic acid ethyl, ethyl propionate and methyl propionate; ether solvents such as tetrahydrofuran, dioxane and dimethoxyethane; glycol ether solvents such as ethylene glycol monomethyl ether, ethylene glycol monoethyl ether, diethylene glycol monomethyl ether, propylene glycol monomethyl ether acetate and 3-methoxybutyl acetate; aromatic solvents such as toluene, xylene and "SWAZOL 1000" (trade name, a high-boiling petroleum solvent, manufactured by COSMO Oil Co., Ltd.); and aliphatic hydrocarbon solvents such as hexane and heptane.

In the coating composition according to the present disclosure, a content of the solvent is in a range of from 0 to 10 mass % based on a total amount of the coating composition.
From the viewpoint of reducing the VOC content in the resulting coating composition and the like, the content of the solvent is preferably in a range of from 0 to 5 mass %, and more preferably in a range of from 0 to 3 mass %.

### <The pigment>

Examples of the pigment include, for example, a lustrous pigment, a coloring pigment, an extender pigment, and any combination thereof.

Examples of the lustrous pigment include, for example, aluminum (including vapor-deposited aluminum), copper, zinc, brass, nickel, glass flakes, aluminum oxide, mica, aluminum oxide coated with titanium oxide and/or iron oxide, and mica coated with titanium oxide and/or iron oxide.

Examples of the coloring pigment include, for example, titanium oxide, zinc oxide, carbon black, molybdenum red, Prussian blue, cobalt blue, an azo pigment, a phthalocyanine pigment, a quinacridone pigment, an isoindoline pigment, a threne pigment, a perylene pigment, a dioxazine pigment, a diketopyrrolopyrrole pigment, and a heat-shielding pigment.

Examples of the extender pigment include, for example, clay, kaolin, barium sulfate, barium carbonate, calcium carbonate, talc, silica, and alumina white.

When the coating composition according to the present disclosure contains the pigment, the content of the pigment is, from the viewpoints of reducing the VOC content in the resulting coating composition and improving the adhesion of the coating film to be formed to a polycarbonate resin substrate, preferably 0.1 mass % or more, more preferably 0.2 mass % or more, and still more preferably 0.3 mass % or more, and preferably 40 mass % or less, more preferably 30 mass % or less, and still more preferably 20 mass % or less, based on the total amount of the coating composition.

### <The method of forming a coating film using coating composition>

A desired coating film can be formed by applying the coating composition according to the present disclosure onto a substrate to form a wet coating film (uncured coating film), and then curing the wet coating film.

The substrate is preferably a resin material from the viewpoints of the adhesion of the coating film to be formed and the releasability between the coating film to be formed and a mold.

Examples of the resin material include, for example, polycarbonate resin; acrylic resins such as polymethyl methacrylate; polyester resins such as polyethylene terephthalate, polyethylene naphthalate, poly(1,4-cyclohexanedimethylene terephthalate), polyethylene-1,2-diphenoxyethane-4,4'-dicarboxylate, and polybutylene terephthalate; epoxy resins represented by commercially available products such as Epikote (trade name, manufactured by Yuka Shell Epoxy Co., Ltd.); polyimide resin; novolac resin; phenol resin; acrylonitrile-butadiene-styrene (ABS) resin; acrylonitrile-ethylene-styrene (AES) resin; acrylonitrile-styrene-acrylate (ASA) resin; vinyl chloride resin; vinylidene chloride resin; polyurethane resin; cellulose ester resins (e.g., cellulose triacetate, cellulose diacetate, cellulose propionate, cellulose butyrate, cellulose acetate propionate, and nitrocellulose); polyamide resin; polystyrene resins (e.g., syndiotactic polystyrene); polyolefin resins (e.g., polypropylene, polyethylene, and polymethylpentene); polysulfone resin; polyethersulfone resin; polyarylate resin; polyetherimide resin; polyetherketone resin; various fiber-reinforced plastic materials (Fiber Reinforced Plastics; hereinafter sometimes abbreviated as "FRP material" or simply "FRP"); polymer alloys thereof; and recycled materials thereof. Further, a material obtained by mixing the resin material with a compound containing a reactive functional group such as a hydroxyl group, an amino group, a mercapto group, a silanol group, a vinyl group, or an epoxy group, or with wood fibers, cellulose nanofibers, kenaf, or the like may also be used as the substrate.

When the substrate according to the present disclosure is a resin material, the resin material is preferably at least one resin material selected from polycarbonate resin and a polymer alloy of polycarbonate resin and another resin.

The substrate may, for example, be one in which a primer coating material, an intermediate coating material, or a top coating material has been applied onto the resin material to previously form a primer layer, an intermediate coating layer, or a top coating layer.

The substrate may also be one that has been subjected to treatment by at least one physical method (physical treatment) selected from plasma treatment, corona discharge treatment, active energy ray treatment, flame treatment, blast treatment, polishing treatment, and the like.

Incidentally, the coating composition according to the present disclosure is preferably applied directly onto the substrate.
Furthermore, the application of an article to be coated with the coating composition according to the present disclosure is not particularly limited, and examples thereof include exterior body panels of automobiles such as passenger cars, trucks, motorcycles, and buses; interior and exterior automotive parts such as bumpers, center pillars, mirrors, door handles, instrument panels, door trims, and center consoles; furniture and building-related parts such as chairs, vanity mirrors, window frames, and gates; and exterior panels of household electrical appliances such as mobile phones and audio equipment.

The method of applying the coating composition according to the present disclosure onto the substrate is not particularly limited. For example, the coating composition may be applied by air spray, airless spray, rotary atomization coating, dip coating, an applicator, a brush, a roller, in-mold coating, or the like. Electrostatic application may also be performed during the application.

The coating film thickness of the coating composition according to the present disclosure is, in terms of the cured film thickness and from the viewpoints of releasability of the coating film to be formed from a mold and the like, preferably 70 µm or more, more preferably 80 µm or more, and still more preferably 90 µm or more, and preferably 1000 µm or less, more preferably 900 µm or less, and still more preferably 800 µm or less.
The coating composition according to the present disclosure can be cured on the coated substrate by heating.

### <Heating>

For the heating, a technique known in the art may be appropriately used. Specifically, the heating may be performed using, for example, hot air, hot gas, an infrared heater, an IR radiator, an oven, a heating roller, a hot press, or microwave irradiation. From the viewpoints of ease of operation and the like, the heating is preferably performed using hot air, an infrared heater, a hot press, or the like.

The heating temperature is, from the viewpoints of productivity, workability, adhesion of the coating film to be formed to a polycarbonate resin substrate, releasability from a mold, and the like, preferably 30°C or higher, more preferably 50°C or higher, and still more preferably 60°C or higher, and preferably 130°C or lower, more preferably 120°C or lower, and still more preferably 110°C or lower.
The heating time is, from the viewpoints of productivity, workability, adhesion of the coating film to be formed to a polycarbonate resin substrate, releasability from a mold, and the like, preferably 20 seconds or longer, more preferably 40 seconds or longer, and preferably 60 minutes or shorter, more preferably 10 minutes or shorter.

The coating composition according to the present disclosure preferably has a Martens hardness of 60 N/mm² or more, more preferably 70 N/mm² or more, and still more preferably 80 N/mm² or more, and preferably 150 N/mm² or less, more preferably 140 N/mm² or less, and still more preferably 130 N/mm² or less, from the viewpoints of adhesion of the coating film to be formed to a polycarbonate resin substrate, releasability from a mold, and the like.

The Martens hardness is measured as follows.
(i) The coating composition is applied onto a polycarbonate resin substrate so that the film thickness after being dried is 200 µm, thereby forming an uncured coating film.
(ii) The uncured coating film is heated and cured at 80°C for 1 minute to form a cured coating film.
(iii) A square pyramidal diamond indenter is pressed into the cured coating film at a temperature of 23°C under the conditions of a maximum test load of 20 mN for 20 seconds.

The Martens hardness in the present specification can be measured using a FISCHERSCOPE (registered trademark) HM2000S (trade name, manufactured by Fischer Instruments K.K.). The Martens hardness is measured by pressing an indenter into the surface of the coating film under an atmosphere at a temperature of 23°C and a relative humidity of 50% RH under the conditions of a maximum test load of 20 mN for 20 seconds. As the indenter, a Vickers square pyramidal indenter (material: diamond) is used, and the position of the sample is adjusted so that the vicinity of the center of one ridge of the pyramidal portion serves as the point of action of the indenter.

The specific procedure for measuring the Martens hardness in the present specification is as follows:
(1) The indenter is pressed in under the conditions of a maximum test load of 20 mN for 20 seconds.
(2) After the maximum test load is reached, the load is removed over 20 seconds.
(3) While changing the measurement position, steps (1) and (2) are repeated, and data are collected at three points for each sample.
(4) The Martens hardness is calculated by dividing the test load by the surface area penetrated by the indenter, and the average of the three measured values is taken.

As the coated panel for measuring the Martens hardness, a coating film having a dry film thickness of 200 µm is formed on "Makrolon AL2447" (trade name, manufactured by Covestro AG; flat polycarbonate resin substrate having dimensions of 100 mm × 100 mm × 2 mm), followed by heating and curing at 80°C for 1 minute.

The coating composition according to the present disclosure can also be suitably used for coating by an in-mold coating method. The in-mold coating method has the advantage of reducing environmental impact because it can generally use a coating composition having a low VOC content and can further reduce air-conditioning energy during the coating process.

### [The in-mold coating method]

The in-mold coating method according to the present disclosure includes a step of injecting the coating composition according to the present disclosure (hereinafter, when the coating composition according to the present disclosure is used in an in-mold coating method, it is referred to as an "in-mold coating composition") between a molded substrate and the inner wall of a mold, curing the in-mold coating composition, and then removing the coated molded article from the mold.

As the in-mold coating method, any conventional method for molding and coating within a mold may be used without particular limitation. Specifically, for example, the methods described in Japanese Unexamined Patent Publications 2000-141407 and 2008-525212 (Translation of PCT International Application) may be used.

Incidentally, the resin molding mold used for molding the resin material and the in-mold coating mold used for in-mold coating of the in-mold coating composition may be the same or different. When the resin molding mold and the in-mold coating mold are the same, for example, a resin material heated and melted in an injection cylinder is injected between the resin molding molds having the desired shape of the molded article, cooled and pressurized in the resin molding mold to form a molded article, and the resin molding mold is then separated from the surface of the molded article made of the resin material. Subsequently, a gap sufficient for injecting the in-mold coating composition is provided between the surface of the molded article made of the resin material and the in-mold coating mold, the in-mold coating composition is injected between the surface of the molded article made of the resin material and the inner wall of the in-mold coating mold, and the in-mold coating mold is closed to form an uncured in-mold coating film on the molded article made of the resin material. Subsequently, the uncured in-mold coating film formed on the molded article made of the resin material is heated and molded into the desired shape to form a cured in-mold coating film on the molded article made of the resin material, thereby obtaining an in-mold coated molded article.

When the resin molding mold and the first coating film coating mold are different, for example, a resin material heated and melted in an injection cylinder is injected between the resin molding molds having the desired shape of the molded article, cooled and pressurized in the resin molding mold to form a molded article, and the resin molding mold is then separated from and removed from the surface of the molded article made of the resin material. Subsequently, the in-mold coating mold is brought close to the surface of the resin molded article, a gap sufficient for injecting the in-mold coating composition is provided between the surface of the molded article made of the resin material and the in-mold coating mold, the in-mold coating composition is injected between the surface of the molded article made of the resin material and the inner wall of the in-mold coating mold, and the in-mold coating mold is closed to form an uncured in-mold coating film on the molded article made of the resin material. Subsequently, the uncured in-mold coating film formed on the molded article made of the resin material is heated and molded into the desired shape to form a cured in-mold coating film on the molded article made of the resin material, thereby obtaining an in-mold coated molded article.

Further, from the viewpoints of releasability between the in-mold coated molded article and the in-mold coating mold, and the like, an external release agent may be applied to the mold. Examples of the external release agent include fluorine-based, silicone-based, surfactant-based, and wax-based external release agents.

The heating temperature for melting the resin in the injection cylinder is arbitrarily determined depending on the type of the resin material and the like, but is preferably 70 to 300°C. The temperature of the mold during injection of the resin material is arbitrarily determined depending on the molding time, the type of the resin material, and the like, but is preferably 30 to 120°C. The molding time of the resin material may be until the resin material is completely solidified. However, when the in-mold coating composition is injected, it is sufficient that the resin material has been solidified to such an extent that the molded shape is not impaired, and the molding time is usually preferably approximately 20 seconds to 60 minutes.

The amount of the in-mold coating composition injected into the in-mold coating mold is an amount sufficient to obtain the desired film thickness and, from the viewpoints of releasability of the coating film to be formed from the mold and the like, is preferably an amount sufficient to obtain a cured film thickness of 70 µm or more, more preferably 80 µm or more, and still more preferably 90 µm or more, and preferably an amount sufficient to obtain a cured film thickness of 1000 µm or less, more preferably 900 µm or less, and still more preferably 800 µm or less.

The heating temperature for heating the uncured in-mold coating film is preferably 20°C or higher, more preferably 40°C or higher, and still more preferably 60°C or higher, and preferably 130°C or lower, more preferably 120°C or lower, and still more preferably 110°C or lower.

The heating time for heating the uncured in-mold coating film is preferably 20 seconds or longer, more preferably 30 seconds or longer, and still more preferably 40 seconds or longer, and preferably 10 minutes or shorter, more preferably 5 minutes or shorter, and still more preferably 4 minutes or shorter.

The uncured in-mold coating film is preferably pressurized during heating and curing.

When the pressurization is performed, the pressure is preferably in a range of 2 to 14 MPa from the viewpoint of adhesion of the coating film to be formed to a polycarbonate resin substrate, and the like.

### EXAMPLES

The present disclosure will be described in further detail below with reference to Production Examples, Examples, and Comparative Examples. Incidentally, these Production Examples, Examples, and Comparative Examples are merely illustrative and are not intended to limit the scope of the present disclosure. In the Production Examples, Examples, and Comparative Examples, "parts" and "%" are on a mass basis unless otherwise specified. The film thickness of the coating film is based on the cured coating film.

The respective components used in the following examples are as follows.

### [The preparation of hydroxyl group-containing acrylic resin composition]

### [Production Example 1]

A reaction vessel equipped with a thermometer, a thermostat, a stirrer, a reflux condenser, a nitrogen inlet tube, and a dropping device was charged with 40 parts of 1,4-cyclohexanedimethanol. While blowing nitrogen gas into the reaction vessel, the charged liquid was stirred at 150°C, and a monomer mixture consisting of 25 parts of styrene, 15 parts of methyl methacrylate, 20 parts of n-butyl acrylate, 40 parts of 2-hydroxyethyl methacrylate, and 8 parts of ditertiary amyl peroxide (polymerization initiator) was added dropwise to the reaction vessel at a constant rate over 4 hours. Thereafter, the contents of the reaction vessel were aged at 150°C for 1 hour and then cooled to obtain a hydroxyl group-containing acrylic resin (A2-1) composition having a solids concentration of 100 mass %. The hydroxyl group-containing acrylic resin in the obtained hydroxyl group-containing acrylic resin (A2-1) composition had a hydroxyl value of 172 mg KOH/g, a number-average molecular weight of 1,900, and a glass transition temperature of 39.0°C.

### [Production Example 2]

A reaction vessel equipped with a thermometer, a thermostat, a stirrer, a reflux condenser, a nitrogen inlet tube, and a dropping device was charged with 40 parts of 1,4-cyclohexanedimethanol. While blowing nitrogen gas into the reaction vessel, the charged liquid was stirred at 150°C, and a monomer mixture consisting of 30 parts of n-butyl acrylate, 30 parts of 2-ethylhexyl acrylate, 40 parts of 2-hydroxyethyl methacrylate, and 8 parts of ditertiary amyl peroxide (polymerization initiator) was added dropwise to the reaction vessel at a constant rate over 4 hours. Thereafter, the contents of the reaction vessel were aged at 150°C for 1 hour and then cooled to obtain a hydroxyl group-containing acrylic resin (A2-2) composition having a solids concentration of 100 mass %. The hydroxyl group-containing acrylic resin in the obtained hydroxyl group-containing acrylic resin (A2-2) composition had a hydroxyl value of 172 mg KOH/g, a number-average molecular weight of 1,900, and a glass transition temperature of -27.1°C.

### [Production Example 3]

A reaction vessel equipped with a thermometer, a thermostat, a stirrer, a reflux condenser, a nitrogen inlet tube, and a dropping device was charged with 40 parts of 1,4-cyclohexanedimethanol. While blowing nitrogen gas into the reaction vessel, the charged liquid was stirred at 150°C, and a monomer mixture consisting of 30 parts of styrene, 30 parts of methyl methacrylate, 30 parts of 2-ethylhexyl acrylate, 10 parts of 2-hydroxyethyl methacrylate, and 8 parts of ditertiary amyl peroxide (polymerization initiator) was added dropwise to the reaction vessel at a constant rate over 4 hours. Thereafter, the contents of the reaction vessel were aged at 150°C for 1 hour and then cooled to obtain a hydroxyl group-containing acrylic resin (A2-3) composition having a solids concentration of 100 mass %. The hydroxyl group-containing acrylic resin in the obtained hydroxyl group-containing acrylic resin (A2-3) composition had a hydroxyl value of 43 mg KOH/g, a number-average molecular weight of 1,900, and a glass transition temperature of 32.6°C.

### [Production Example 4]

A reaction vessel equipped with a thermometer, a thermostat, a stirrer, a reflux condenser, a nitrogen inlet tube, and a dropping device was charged with 40 parts of 1,4-cyclohexanedimethanol. While blowing nitrogen gas into the reaction vessel, the charged liquid was stirred at 150°C, and a monomer mixture consisting of 25 parts of styrene, 15 parts of methyl methacrylate, 20 parts of 2-ethylhexyl acrylate, 40 parts of 2-hydroxyethyl methacrylate, and 20 parts of ditertiary amyl peroxide (polymerization initiator) was added dropwise to the reaction vessel at a constant rate over 4 hours. Thereafter, the contents of the reaction vessel were aged at 150°C for 1 hour and then cooled to obtain a hydroxyl group-containing acrylic resin (A2-4) composition having a solids concentration of 100 mass %. The hydroxyl group-containing acrylic resin in the obtained hydroxyl group-containing acrylic resin (A2-4) composition had a hydroxyl value of 165 mg KOH/g, a number-average molecular weight of 700, and a glass transition temperature of 39.5°C.

### [The preparation of the pigment dispersion (P)]

### [Production Example 5]

A container equipped with a stirrer was charged with 4.7 parts of butyl acetate, 1 part of "Raven 5000 ULTRA III POWDER" (trade name, manufactured by BIRLA CARBON, carbon black pigment, solids concentration: 100%), 0.1 part of "SOLSPERSE 5000S" (trade name, manufactured by LUBRISOL, phthalocyanine pigment derivative, solids concentration: 100%), and 1 part of "DISPERBYK-2013" (trade name, manufactured by BYK Chemie, dispersant, solids concentration: 100%), and the components were uniformly mixed. Next, the resulting mixed solution was placed in a wide-mouth glass bottle, glass beads having a diameter of about 1.3 mm were added as dispersion media, and the bottle was sealed. The mixture was then dispersed with a paint shaker for 4 hours to obtain a pigment dispersion (P-1).

### [The preparation of the coating composition]

### [Example 1]

A container equipped with a stirrer was charged with 25.0 parts of "THEIC-LD" (trade name, manufactured by Shikoku Chemicals Corporation, ε-caprolactone-modified tris(2-hydroxyethyl)isocyanurate, number-average molecular weight: 617, solids concentration: 100%), 50.0 parts of the hydroxyl group-containing acrylic resin (A2-1) composition (solids concentration: 100%) obtained in Production Example 1, 25.0 parts of "PLACCEL 305" (trade name, manufactured by Daicel Corporation, polycaprolactone resin having three hydroxyl groups, number-average molecular weight: 550, solids concentration: 100%), 60.0 parts of "Desmodur N3600" (trade name, manufactured by Sumika Covestro Urethane Co., Ltd., isocyanurate of hexamethylene diisocyanate, solids concentration: 100%), 60.0 parts of "Desmodur NZ200" (trade name, manufactured by Sumika Covestro Urethane Co., Ltd., mixture of isocyanurate of hexamethylene diisocyanate and isocyanurate of isophorone diisocyanate, solids concentration: 100%), 1.5 parts of "Neostann U-830" (trade name, manufactured by Nitto Kasei Co., Ltd., dioctyltin diversatate, solids concentration: 100%), 1.2 parts of methyl orthoacetate (solids concentration: 0%), 1.5 parts of "Amide AP-1" (trade name, manufactured by Mitsubishi Chemical Corporation, stearamide, solids concentration: 100%), 0.1 part of "BYK-333" (trade name, manufactured by BYK Chemie, surface modifier (polyether-modified polydimethylsiloxane), solids concentration: 100%), 1.2 parts of "TINUVIN 400" (trade name, manufactured by BASF, triazine-based ultraviolet absorber, solids concentration: 85%), and 2.0 parts of "TINUVIN 292" (trade name, manufactured by BASF, hindered amine light stabilizer, solids concentration: 100%). The components were uniformly mixed to obtain in-mold coating composition No. 1 having a solids concentration of 99.4%.

### [Examples 2 to 53 and Comparative Examples 1 to 3]

In-mold coating compositions No. 2 to No. 56 were obtained in the same manner as in Example 1 except that the formulation compositions shown in Tables 1-1 to 1-4 below were used. Incidentally, in Tables 1-1 to 1-4, "polycaprolactone resin having three or more hydroxyl groups in one molecule (A3')" is denoted as "polycaprolactone resin (A3')".

### [Table 1-1]

**Table 1-1**

| | | | Example | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| In-mold coating composition No. | | | 1 | 2 | 3 | 4 | 5 | 6 | 7 | 8 | 9 | 10 | 11 | 12 | 13 | 14 |
| Hydroxyl group-containing compound (A) | Hydroxyl group-containing compound having an isocyanurate ring structure (A1) | THEIC-LD | 25.0 | 100.0 | 80.0 | 40.0 | 3.0 | 5.0 | 50.0 | 60.0 | | | 50.0 | 50.0 | 10.0 | 5.0 |
| | | PLACCEL E2394 (Note 1) | | | | | | | | | 25.0 | | | | | |
| | | THEIC-EP (Note 2) | | | | | | | | | | 25.0 | | | | |
| | Hydroxyl group-containing acrylic resin (A2) | Hydroxyl group-containing acrylic resin (A2-1) | 50.0 | | | 60.0 | 60.0 | 60.0 | 45.0 | 35.0 | 50.0 | 50.0 | 30.0 | 40.0 | 80.0 | 90.0 |
| | | Hydroxyl group-containing acrylic resin (A2-2) | | | | | | | | | | | | | | |
| | | Hydroxyl group-containing acrylic resin (A2-3) | | | | | | | | | | | | | | |
| | | Hydroxyl group-containing acrylic resin (A2-4) | | | | | | | | | | | | | | |
| | Polycaprolactone resin (A3') | PLACCEL 305 | 25.0 | | 20.0 | | 37.0 | 35.0 | 5.0 | 5.0 | 25.0 | 25.0 | 20.0 | 10.0 | 10.0 | 25.0 |
| | | PLACCEL 303 (Note 3) | | | | | | | | | | | | | | |
| | PLACCEL 205U (Note 4) | | | | | | | | | | | | | | | |
| | Desmophen VPLS2249/1 (Note 5) | | | | | | | | | | | | | | | |
| Polyisocyanate compound (B) | Desmodur N3600 | | 60.0 | 55.0 | 55.0 | 60.0 | 60.0 | 60.0 | 55.0 | 55.0 | 50.0 | 60.0 | 60.0 | 60.0 | 60.0 | 60.0 |
| | Desmodur NZ200 | | 60.0 | 55.0 | 55.0 | 60.0 | 60.0 | 60.0 | 55.0 | 55.0 | 50.0 | 60.0 | 60.0 | 60.0 | 60.0 | 60.0 |
| | Desmodur N3900 (Note 6) | | | | | | | | | | | | | | | |
| Curing catalyst (C) | Neostann U-830 | | 1.5 | 1.5 | 1.5 | 1.5 | 1.5 | 1.5 | 1.5 | 1.5 | 1.5 | 1.5 | 1.5 | 1.5 | 1.5 | 1.5 |
| | K-KAT A209 (Note 7) | | | | | | | | | | | | | | | |
| Dehydrating agent (D) | Methyl orthoacetate | | 1.2 | 1.2 | 1.2 | 1.2 | 1.2 | 1.2 | 1.2 | 1.2 | 1.2 | 1.2 | 1.2 | 1.2 | 1.2 | 1.2 |
| | Trimethyl orthoformate | | | | | | | | | | | | | | | |
| Internal release agent (E) | Amide AP-1 | | 1.5 | 1.5 | 1.5 | 1.5 | 1.5 | 1.5 | 1.5 | 1.5 | 1.5 | 1.5 | 1.5 | 1.5 | 1.5 | 1.5 |
| | Moldwiz INT-120IMC (Note 8) | | | | | | | | | | | | | | | |
| | Daifree FB-962 (Note 9) | | | | | | | | | | | | | | | |
| Pigment dispersion (P-1) | Coloring pigment | RAVEN 5000 ULTRA III POWDER | | | | | | | | | | | | | | |
| | Pigment derivative | SOLSPERSE 5000S | | | | | | | | | | | | | | |
| | Dispersant | DISPERBYK-2013 | | | | | | | | | | | | | | |
| | Organic solvent | Butyl acetate | | | | | | | | | | | | | | |
| Organic solvent | Butyl acetate | | | | | | | | | | | | | | | |
| Surface modifier | BYK-333 | | 0.1 | 0.1 | 0.1 | 0.1 | 0.1 | 0.1 | 0.1 | 0.1 | 0.1 | 0.1 | 0.1 | 0.1 | 0.1 | 0.1 |
| Ultraviolet absorber | TINUVIN 400 | | 1.2 | 1.2 | 1.2 | 1.2 | 1.2 | 1.2 | 1.2 | 1.2 | 1.2 | 1.2 | 1.2 | 1.2 | 1.2 | 1.2 |
| Light stabilizer | TINUVIN 292 | | 2.0 | 2.0 | 2.0 | 2.0 | 2.0 | 2.0 | 2.0 | 2.0 | 2.0 | 2.0 | 2.0 | 2.0 | 2.0 | 2.0 |
| Total | | | 227.5 | 217.5 | 217.5 | 227.5 | 227.5 | 227.5 | 217.5 | 217.5 | 207.5 | 227.5 | 227.5 | 227.5 | 227.5 | 247.5 |
| Solids concentration (%) | | | 99.4 | 99.4 | 99.4 | 99.4 | 99.4 | 99.4 | 99.4 | 99.4 | 99.3 | 99.4 | 99.4 | 99.4 | 99.4 | 99.4 |

**[Table 1-2]**

| | | | Example | | | | | | | | | | | | | |
|---|---|---|---|---|---|---|---|---|---|---|---|---|---|---|---|---|
| | | | 15 | 16 | 17 | 18 | 19 | 20 | 21 | 22 | 23 | 24 | 25 | 26 | 27 | 28 |
| In-mold coating composition No. | | | 15 | 16 | 17 | 18 | 19 | 20 | 21 | 22 | 23 | 24 | 25 | 26 | 27 | 28 |
| Hydroxyl group-containing compound (A) | Hydroxyl group-containing compound having an isocyanurate ring structure (A1) | THEIC-LD | 25.0 | 25.0 | 25.0 | 47.0 | 45.0 | 10.0 | 5.0 | 25.0 | 25.0 | 25.0 | 25.0 | 25.0 | 25.0 | 25.0 |
| | | PLACCEL E2394 (Note 1) | | | | | | | | | | | | | | |
| | | THEIC-EP (Note 2) | | | | | | | | | | | | | | |
| | Hydroxyl group-containing acrylic resin (A2) | Hydroxyl group-containing acrylic resin (A2-1) | | | | 50.0 | 50.0 | 50.0 | 45.0 | 50.0 | 50.0 | 50.0 | 50.0 | 50.0 | 50.0 | 50.0 |
| | | Hydroxyl group-containing acrylic resin (A2-2) | 50.0 | | | | | | | | | | | | | |
| | | Hydroxyl group-containing acrylic resin (A2-3) | | 50.0 | | | | | | | | | | | | |
| | | Hydroxyl group-containing acrylic resin (A2-4) | | | 50.0 | | | | | | | | | | | |
| | Polycaprolactone resin (A3') | PLACCEL 305 | 25.0 | 25.0 | 25.0 | 3.0 | 5.0 | 40.0 | 50.0 | | | | 25.0 | 25.0 | 25.0 | 25.0 |
| | | PLACCEL 303 (Note 3) | | | | | | | | 25.0 | | | | | | |
| | PLACCEL 205U (Note 4) | | | | | | | | | | 25.0 | | | | | |
| | Desmophen VPLS2249/1 (Note 5) | | | | | | | | | | | 25.0 | | | | |
| Polyisocyanate compound (B) | Desmodur N3600 | | 60.0 | 60.0 | 60.0 | 60.0 | 60.0 | 60.0 | 60.0 | 65.0 | 55.0 | 65.0 | 90.0 | 25.0 | | 60.0 |
| | Desmodur NZ200 | | 60.0 | 60.0 | 60.0 | 60.0 | 60.0 | 60.0 | 60.0 | 65.0 | 55.0 | 65.0 | 30.0 | 100.0 | 60.0 | 60.0 |
| | Desmodur N3900 (Note 6) | | | | | | | | | | | | | | 60.0 | |
| Curing catalyst (C) | Neostann U-830 | | 1.5 | 1.5 | 1.5 | 1.5 | 1.5 | 1.5 | 1.5 | 1.5 | 1.5 | 1.5 | 1.5 | 1.5 | 1.5 | 0.20 |
| | K-KAT A209 (Note 7) | | | | | | | | | | | | | | | |
| Dehydrating agent (D) | Methyl orthoacetate | | 1.2 | 1.2 | 1.2 | 1.2 | 1.2 | 1.2 | 1.2 | 1.2 | 1.2 | 1.2 | 1.2 | 1.2 | 1.2 | 1.2 |
| | Trimethyl orthoformate | | | | | | | | | | | | | | | |
| Internal release agent (E) | Amide AP-1 | | 1.5 | 1.5 | 1.5 | 1.5 | 1.5 | 1.5 | 1.5 | 1.5 | 1.5 | 1.5 | 1.5 | 1.5 | 1.5 | 1.5 |
| | Moldwiz INT-120IMC (Note 8) | | | | | | | | | | | | | | | |
| | Daifree FB-962 (Note 9) | | | | | | | | | | | | | | | |
| Pigment dispersion (P-1) | Coloring pigment | RAVEN 5000 ULTRA III POWDER | | | | | | | | | | | | | | |
| | Pigment derivative | SOLSPERSE 5000S | | | | | | | | | | | | | | |
| | Dispersant | DISPERBYK-2013 | | | | | | | | | | | | | | |
| | Organic solvent | Butyl acetate | | | | | | | | | | | | | | |
| Organic solvent | Butyl acetate | | | | | | | | | | | | | | | |
| Surface modifier | BYK-333 | | 0.1 | 0.1 | 0.1 | 0.1 | 0.1 | 0.1 | 0.1 | 0.1 | 0.1 | 0.1 | 0.1 | 0.1 | 0.1 | 0.1 |
| Ultraviolet absorber | TINUVIN 400 | | 1.2 | 1.2 | 1.2 | 1.2 | 1.2 | 1.2 | 1.2 | 1.2 | 1.2 | 1.2 | 1.2 | 1.2 | 1.2 | 1.2 |
| Light stabilizer | TINUVIN 292 | | 2.0 | 2.0 | 2.0 | 2.0 | 2.0 | 2.0 | 2.0 | 2.0 | 2.0 | 2.0 | 2.0 | 2.0 | 2.0 | 2.0 |
| Total | | | 227.5 | 227.5 | 227.5 | 227.5 | 227.5 | 227.5 | 227.5 | 237.5 | 217.5 | 237.5 | 227.5 | 232.5 | 227.5 | 226.2 |
| Solids concentration (%) | | | 99.4 | 99.4 | 99.4 | 99.4 | 99.4 | 99.4 | 99.4 | 99.4 | 99.4 | 99.4 | 99.4 | 99.4 | 99.4 | 99.4 |

**[Table 1-3]**

| | | | Example | | | | | | | | | | | | | |
|---|---|---|---|---|---|---|---|---|---|---|---|---|---|---|---|---|
| | | | 29 | 30 | 31 | 32 | 33 | 34 | 35 | 36 | 37 | 38 | 39 | 40 | 41 | 42 |
| In-mold coating composition No. | | | 29 | 30 | 31 | 32 | 33 | 34 | 35 | 36 | 37 | 38 | 39 | 40 | 41 | 42 |
| Hydroxyl group-containing compound (A) | Hydroxyl group-containing compound having an isocyanurate ring structure (A1) | THEIC-LD PLACCEL E2394 (Note 1) | 25.0 | 25.0 | 25.0 | 25.0 | 25.0 | 25.0 | 25.0 | 25.0 | 25.0 | 25.0 | 25.0 | 25.0 | 25.0 | 25.0 |
| | | THEIC-EP (Note 2) | | | | | | | | | | | | | | |
| | Hydroxyl group-containing acrylic resin (A2) | Hydroxyl group-containing acrylic resin (A2-1) | 50.0 | 50.0 | 50.0 | 50.0 | 50.0 | 50.0 | 50.0 | 50.0 | 50.0 | 50.0 | 50.0 | 50.0 | 50.0 | 50.0 |
| | | Hydroxyl group-containing acrylic resin (A2-2) | | | | | | | | | | | | | | |
| | | Hydroxyl group-containing acrylic resin (A2-3) | | | | | | | | | | | | | | |
| | | Hydroxyl group-containing acrylic resin (A2-4) | | | | | | | | | | | | | | |
| | Polycaprolactone resin (A3') | PLACCEL 305 | 25.0 | 25.0 | 25.0 | 25.0 | 25.0 | 25.0 | 25.0 | 25.0 | 25.0 | 25.0 | 25.0 | 25.0 | 25.0 | 25.0 |
| | | PLACCEL 303 (Note 3) | | | | | | | | | | | | | | |
| | PLACCEL 205U (Note 4) | | | | | | | | | | | | | | | |
| | Desmophen VPLS2249/1 (Note 5) | | | | | | | | | | | | | | | |
| Polyisocyanate compound (B) | Desmodur N3600 | | 60.0 | 60.0 | 60.0 | 60.0 | 60.0 | 60.0 | 60.0 | 60.0 | 60.0 | 60.0 | 60.0 | 60.0 | 60.0 | 60.0 |
| | Desmodur NZ200 | | 60.0 | 60.0 | 60.0 | 60.0 | 60.0 | 60.0 | 60.0 | 60.0 | 60.0 | 60.0 | 60.0 | 60.0 | 60.0 | 60.0 |
| | Desmodur N3900 (Note 6) | | | | | | | | | | | | | | | |
| Curing catalyst (C) | Neostann U-830 | | 0.50 | 4.2 | 5.2 | | 0.6 | 0.6 | 0.6 | 0.6 | 0.6 | 0.6 | 0.6 | 0.6 | 0.6 | 0.6 |
| | K-KAT A209 (Note 7) | | | | | 1.5 | | | | | | | | | | |
| Dehydrating agent (D) | Methyl orthoacetate | | 1.2 | 1.2 | 1.2 | 1.2 | | 0.2 | 0.5 | 6.6 | 7.4 | | 1.2 | 1.2 | 1.2 | 1.2 |
| | Trimethyl orthoformate | | | | | | | | | | | 1.2 | | | | |
| Internal release agent (E) | Amide AP-1 | | 1.5 | 1.5 | 1.5 | 1.5 | 1.5 | 1.5 | 1.5 | 1.5 | 1.5 | 1.5 | | 0.2 | 0.5 | 4.2 |
| | Moldwiz INT-120IMC (Note 8) | | | | | | | | | | | | | | | |
| | Daifree FB-962 (Note 9) | | | | | | | | | | | | | | | |
| Pigment dispersion (P-1) | Coloring pigment | RAVEN 5000 ULTRA III POWDER | | | | | | | | | | | | | | |
| | Pigment derivative | SOLSPERSE 5000S | | | | | | | | | | | | | | |
| | Dispersant | DISPERBYK-2013 | | | | | | | | | | | | | | |
| | Organic solvent | Butyl acetate | | | | | | | | | | | | | | |
| Organic solvent | Butyl acetate | | | | | | | | | | | | | | | |
| Surface modifier | BYK-333 | | 0.1 | 0.1 | 0.1 | 0.1 | 0.1 | 0.1 | 0.1 | 0.1 | 0.1 | 0.1 | 0.1 | 0.1 | 0.1 | 0.1 |
| Ultraviolet absorber | TINUVIN 400 | | 1.2 | 1.2 | 1.2 | 1.2 | 1.2 | 1.2 | 1.2 | 1.2 | 1.2 | 1.2 | 1.2 | 1.2 | 1.2 | 1.2 |
| Light stabilizer | TINUVIN 292 | | 2.0 | 2.0 | 2.0 | 2.0 | 2.0 | 2.0 | 2.0 | 2.0 | 2.0 | 2.0 | 2.0 | 2.0 | 2.0 | 2.0 |
| Total | | | 226.5 | 230.2 | 231.2 | 227.5 | 225.4 | 225.6 | 225.9 | 232.0 | 232.8 | 226.6 | 225.1 | 225.3 | 225.6 | 229.3 |
| Solids concentration (%) | | | 99.4 | 99.4 | 99.4 | 99.4 | 99.9 | 99.8 | 99.7 | 97.1 | 96.7 | 99.4 | 99.4 | 99.4 | 99.4 | 99.4 |

**[Table 1-4]**

| | | | Example | | | | | | | | | | | Comparative Example | | |
|---|---|---|---|---|---|---|---|---|---|---|---|---|---|---|---|---|
| | | | 43 | 44 | 45 | 46 | 47 | 48 | 49 | 50 | 51 | 52 | 53 | 1 | 2 | 3 |
| In-mold coating composition No. | | | 43 | 44 | 45 | 46 | 47 | 48 | 49 | 50 | 51 | 52 | 53 | 54 | 55 | 56 |
| Hydroxyl group-containing compound (A) | Hydroxyl group-containing compound having an isocyanurate ring structure (A1) | THEIC-LD | 25.0 | 25.0 | 25.0 | 25.0 | 25.0 | 25.0 | 25.0 | 25.0 | 25.0 | 80.0 | 25.0 | | 25.0 | 25.0 |
| | | PLACCEL E2394 (Note 1) | | | | | | | | | | | | | | |
| | | THEIC-EP (Note 2) | | | | | | | | | | | | | | |
| | Hydroxyl group-containing acrylic resin (A2) | Hydroxyl group-containing acrylic resin (A2-1) | 50.0 | 50.0 | 50.0 | 50.0 | 50.0 | 50.0 | 50.0 | 50.0 | 50.0 | | 50.0 | 60.0 | 50.0 | 50.0 |
| | | Hydroxyl group-containing acrylic resin (A2-2) | | | | | | | | | | | | | | |
| | | Hydroxyl group-containing acrylic resin (A2-3) | | | | | | | | | | | | | | |
| | | Hydroxyl group-containing acrylic resin (A2-4) | | | | | | | | | | | | | | |
| | Polycaprolactone resin (A3') | PLACCEL 305 | 25.0 | 25.0 | 25.0 | 25.0 | 25.0 | 25.0 | 25.0 | 25.0 | 25.0 | 20.0 | 25.0 | 40.0 | 25.0 | 25.0 |
| | | PLACCEL 303 (Note 3) | | | | | | | | | | | | | | |
| | PLACCEL 205U (Note 4) | | | | | | | | | | | | | | | |
| | Desmophen VPLS2249/1 (Note 5) | | | | | | | | | | | | | | | |
| Polyisocyanate compound (B) | Desmodur N3600 | | 60.0 | 60.0 | 60.0 | 60.0 | 65.0 | 80.0 | 15.0 | 5.0 | 60.0 | 60.0 | 60.0 | 60.0 | 60.0 | 60.0 |
| | Desmodur NZ200 | | 60.0 | 60.0 | 60.0 | 60.0 | 5.0 | 15.0 | 115.0 | 120.0 | 60.0 | 60.0 | 60.0 | 60.0 | 60.0 | 60.0 |
| | Desmodur N3900 (Note 6) | | | | | | | | | | | | | | | |
| Curing catalyst (C) | Neostann U-830 | | 0.6 | 0.6 | 0.6 | 0.6 | 0.6 | 0.6 | 0.6 | 0.6 | 0.6 | 0.6 | 0.6 | 0.6 | | 0.6 |
| | K-KAT A209 (Note 7) | | | | | | | | | | | | | | | |
| Dehydrating agent (D) | Methyl orthoacetate | | 1.2 | 1.2 | 1.2 | 1.2 | 1.2 | 1.2 | 1.2 | 1.2 | 1.2 | 1.2 | 1.2 | 1.2 | 1.2 | 1.2 |
| | Trimethyl orthoformate | | | | | | | | | | | | | | | |
| Internal release agent (E) | Amide AP-1 | | 5.2 | | | 1.5 | 1.5 | 1.5 | 1.5 | 1.5 | 1.5 | 1.5 | 1.5 | 1.5 | 1.5 | 1.5 |
| | Moldwiz INT-120IMC (Note 8) | | | 1.5 | | | | | | | | | | | | |
| | Daifree FB-962 (Note 9) | | | | 1.5 | | | | | | | | | | | |
| Pigment dispersion (P-1) | Coloring pigment | RAVEN 5000 ULTRA III POWDER | | | | | | | | | 1.0 | 1.0 | | | | |
| | Pigment derivative | SOLSPERSE 5000S | | | | | | | | | 0.1 | 0.1 | | | | |
| | Dispersant | DISPERBYK-2013 | | | | | | | | | 1.0 | 1.0 | | | | |
| | Organic solvent | Butyl acetate | | | | | | | | | 4.7 | 4.7 | | | | |
| Organic solvent | Butyl acetate | | | | | 22.0 | | | | | | | | | | 30.0 |
| Surface modifier | BYK-333 | | 0.1 | 0.1 | 0.1 | 0.1 | 0.1 | 0.1 | 0.1 | 0.1 | 0.1 | 0.1 | | 0.1 | 0.1 | 0.1 |
| Ultraviolet absorber | TINUVIN 400 | | 1.2 | 1.2 | 1.2 | 1.2 | 1.2 | 1.2 | 1.2 | 1.2 | 1.2 | 1.2 | | 1.2 | 1.2 | 1.2 |
| Light stabilizer | TINUVIN 292 | | 2.0 | 2.0 | 2.0 | 2.0 | 2.0 | 2.0 | 2.0 | 2.0 | 2.0 | 2.0 | | 2.0 | 2.0 | 2.0 |
| Total | | | 230.3 | 226.6 | 226.6 | 248.6 | 176.6 | 201.6 | 236.6 | 231.6 | 233.4 | 233.4 | 223.3 | 226.6 | 226.0 | 256.6 |
| Solids concentration (%) | 99.4 | 99.4 | 99.4 | 91.2 | 99.2 | 99.3 | 99.4 | 99.4 | 97.4 | 97.4 | 99.5 | 99.4 | 99.4 | 88.3 | | |

Incidentally, the respective components listed in the tables are as follows.
(Note 1) "PLACCEL E2394": trade name, manufactured by Daicel Corporation, ε-caprolactone-modified tris(2-hydroxyethyl)isocyanurate, number-average molecular weight: 1000, solids concentration: 100%
(Note 2) "THEIC-EP": trade name, manufactured by Shikoku Chemicals Corporation, propylene oxide-modified tris(2-hydroxyethyl)isocyanurate, number-average molecular weight: 465, solids concentration: 100%
(Note 3) "PLACCEL 303": trade name, manufactured by Daicel Corporation, polycaprolactone resin having three hydroxyl groups, number-average molecular weight: 310, solids concentration: 100%
(Note 4) "PLACCEL 205U": trade name, manufactured by Daicel Corporation, polycaprolactone resin having two hydroxyl groups, number-average molecular weight: 530, solids concentration: 100%
(Note 5) "Desmophen VPLS 2249/1": trade name, manufactured by Covestro AG, hydroxyl group-containing polyester resin, number-average molecular weight: 400, solids concentration: 100%
(Note 6) "Desmodur N3900": trade name, manufactured by Sumika Covestro Urethane Co., Ltd., polyisocyanate having an iminooxadiazinedione group, solids concentration: 100%
(Note 7) "K-KAT A209": trade name, manufactured by KING INDUSTRIES, zirconium complex, solids concentration: 72.5%
(Note 8) "Moldwiz INT-120IMC": trade name, manufactured by AXEL PLASTICS, mixture containing a tertiary fatty acid dimethylamide, solids concentration: 100%
(Note 9) "DAIFREE FB-962": trade name, manufactured by Daikin Industries, Ltd., fluoropolymer, solids concentration: 100%

[The preparation of in-mold coated molded article]

### [Example 54]

### (The preparation of in-mold coated molded article)

A polycarbonate (PC) resin (Makrolon AL2447, manufactured by Covestro AG) was charged into an injection molding cylinder and heated to melt at 270°C. Thereafter, the molten polycarbonate resin was injected between resin molding molds maintained at 80°C and cooled while maintaining the pressure for 30 seconds to obtain a flat PC resin molded article having dimensions of 100 mm × 100 mm × 2 mm. Subsequently, the resin molding mold was temporarily opened, and the in-mold coating composition No. 1 obtained in Example 1 was injected between the resulting molded article and the coating film coating mold. The interior of the coating film coating mold was heated to 80°C and maintained at that temperature, followed by pressurization at a molding pressure of 5 MPa for 1 minute. Thereafter, the pressure in the coating film coating mold was released, and the coating film coating mold was opened, thereby producing in-mold coated molded article No. 1 having a coating film with a cured film thickness of 200 µm formed on the molded article.

### [Examples 55 to 106 and Comparative Examples 4 to 6]

In-mold coated molded articles No. 2 to No. 56 were prepared in the same manner as in Example 54 except that the coating compositions shown in Table 2 below were used.

### [The measurement of Martens hardness]

The Martens hardness (N/mm²) of each cured coating film of in-mold coated molded articles No. 1 to No. 56 was measured using a "FISCHERSCOPE (registered trademark) HM2000S" (trade name, manufactured by Fischer Instruments K.K.). The results are shown in Tables 2-1 to 2-4.

### [The evaluation of in-mold coated molded articles]

Each cured coating film of in-mold coated molded articles No. 1 to No. 56 was evaluated for adhesion to the PC resin substrate, releasability, and smoothness. The evaluation results are shown in Tables 2-1 to 2-4.

### [The adhesion to PC resin substrate]

Each coating film of in-mold coated molded articles No. 1 to No. 56 was cut with a cutter in a grid pattern down to the substrate to form 100 squares each measuring 2 mm × 2 mm. Adhesive cellophane tape was then applied to the surface of each test coated panel, and the tape was rapidly peeled off at a temperature of 23 ± 2°C and a relative humidity of 50 ± 5% RH. The remaining state of the grid-pattern coating film after peeling was examined, and the adhesion was evaluated according to the following criteria. Ratings A, B, and C were regarded as acceptable.

### [The evaluation criteria]

A: All 100 grid-pattern coating film squares remained, and no small chipping or lifting of the coating film was observed along the cutter-cut edges.
B: All 100 grid-pattern coating film squares remained, but small chipping or lifting of the coating film was observed along the cutter-cut edges.
C: 90 to 99 grid-pattern coating film squares remained.
D: 80 to 89 grid-pattern coating film squares remained.
E: 79 or fewer grid-pattern coating film squares remained.

### [The releasability]

During preparation of each of the in-mold coated molded articles No. 1 to No. 56, when the coating film coating mold was opened, a spatula was inserted into the gap between one corner of the in-mold coated molded article and the coating film coating mold and lifted to perform a mold release test for releasing the in-mold coated molded article from the coating film coating mold. If the in-mold coated molded article could not be released, the spatula was removed, inserted again into the gap at the adjacent corner, and the release test was repeated in the same manner. The release test was performed at all four corners until the in-mold coated molded article was released, with a maximum of four attempts. For in-mold coated molded articles in which peeling of the coating film was observed, the surface of the in-mold coated molded article was visually inspected, the number of peeled coating film portions was counted, and the releasability was evaluated according to the following criteria. Ratings A, B, and C were regarded as acceptable.

### [The evaluation criteria]

A: The in-mold coated molded article was released from the mold during the first or second release test, and the number of peeled coating film portions was zero.
B: The in-mold coated molded article was released from the mold during the third or fourth release test, and the number of peeled coating film portions was zero.
C: The in-mold coated molded article was released from the mold during the first to fourth release tests, and the number of peeled coating film portions was one.
D: The in-mold coated molded article was released from the mold during the first to fourth release tests, and the number of peeled coating film portions was two or more.
E: The in-mold coated molded article was not released from the mold even after four release tests, or the coating film was completely peeled from the substrate.

### [The smoothness]

The smoothness of each coating film of in-mold coated molded articles No. 1 to No. 56 was evaluated according to the following criteria based on the Long Wave (LW) value measured using a "Wave Scan" (trade name, manufactured by BYK Gardner). A smaller LW value indicates higher smoothness of the coated surface. Ratings A, B, and C were regarded as acceptable.

### [The evaluation criteria]

A: LW value of less than 12.
B: LW value of 12 or more and less than 15.
C: LW value of 15 or more and less than 18.
D: LW value of 18 or more and less than 20.
E: LW value of 20 or more.

### [Table 2-1]

**Table 2-1**

| | | Example | | | | | | | | | | | | | |
|---|---|---|---|---|---|---|---|---|---|---|---|---|---|---|---|
| | | 54 | 55 | 56 | 57 | 58 | 59 | 60 | 61 | 62 | 63 | 64 | 65 | 66 | 67 |
| In-mold coating composition No. | | 1 | 2 | 3 | 4 | 5 | 6 | 7 | 8 | 9 | 10 | 11 | 12 | 13 | 14 |
| In-mold coated molded article No. | | 1 | 2 | 3 | 4 | 5 | 6 | 7 | 8 | 9 | 10 | 11 | 12 | 13 | 14 |
| Martens hardness (N/mm²) | | 101 | 65 | 63 | 105 | 95 | 96 | 98 | 92 | 102 | 101 | 68 | 76 | 125 | 131 |
| Evluation | Adhesion | A | A | A | A | C | B | A | A | A | A | A | A | B | B |
| | Releasability | A | C | C | A | A | A | B | C | A | A | C | B | A | A |
| | Smoothness | A | C | A | C | A | A | C | C | A | B | A | B | A | B |

**[Table 2-2]**

| | | Example | | | | | | | | | | | | | |
|---|---|---|---|---|---|---|---|---|---|---|---|---|---|---|---|
| | | 68 | 69 | 70 | 71 | 72 | 73 | 74 | 75 | 76 | 77 | 78 | 79 | 80 | 81 |
| In-mold coating composition No. | | 15 | 16 | 17 | 18 | 19 | 20 | 21 | 22 | 23 | 24 | 25 | 26 | 27 | 28 |
| In-mold coated molded article No. | | 15 | 16 | 17 | 18 | 19 | 20 | 21 | 22 | 23 | 24 | 25 | 26 | 27 | 28 |
| Martens hardness (N/mm²) | | 96 | 98 | 94 | 106 | 103 | 65 | 62 | 112 | 62 | 63 | 96 | 131 | 98 | 62 |
| Evaluation | Adhesion | A | A | A | A | A | B | C | A | A | A | A | B | A | A |
| | Releasability | B | B | B | A | A | B | C | A | A | A | A | A | A | C |
| | Smoothness | A | A | A | C | B | A | A | A | B | B | A | A | A | C |

**[Table 2-3]**

| | | Example | | | | | | | | | | | | | |
|---|---|---|---|---|---|---|---|---|---|---|---|---|---|---|---|
| | | 82 | 83 | 84 | 85 | 86 | 87 | 88 | 89 | 90 | 91 | 92 | 93 | 94 | 95 |
| In-mold coating composition No. | | 29 | 30 | 31 | 32 | 33 | 34Example | 35 | 36 | 37 | 38 | 39 | 40 | 41 | 42 |
| In-mold coated molded article No. | | 29 | 30 | 31 | 32 | 33 | 34 | 35 | 36 | 37 | 38 | 39 | 40 | 41 | 42 |
| Martens hardness (N/mm²) | | 83 | 105 | 108 | 102 | 106 | 104 | 102 | 99 | 94 | 101 | 102 | 101 | 100 | 101 |
| Evaluation | Adhesion | A | A | A | A | A | A | A | A | A | A | A | A | A | A |
| | Releasability | B | A | A | A | A | A | A | A | B | A | C | B | A | A |
| | Smoothness | B | B | C | A | C | B | A | A | A | A | A | A | A | A |

**[Table 2-4]**

| | | Example | | | | | | | | | | | Comparative Example | | |
|---|---|---|---|---|---|---|---|---|---|---|---|---|---|---|---|
| | | 96 | 97 | 98 | 99 | 100 | 101 | 102 | 103 | 104 | 105 | 106 | 4 | 5 | 6 |
| In-mold coating composition No. | | 43 | 44 | 45 | 46 | 47 | 48 | 49 | 50 | 51 | 52 | 53 | 54 | 55 | 56 |
| In-mold coated molded article No. | | 43 | 44 | 45 | 46 | 47 | 48 | 49 | 50 | 51 | 52 | 53 | 54 | 55 | 56 |
| Martens hardness (N/mm²) | | 102 | 101 | 101 | 89 | 55 | 62 | 148 | 152 | 92 | 62 | 99 | 101 | 1.6 | 32 |
| Evaluation | Adhesion | A | A | A | A | A | A | B | C | A | A | A | E | D | D |
| | Releasability | B | A | B | C | C | B | A | A | B | C | A | A | E | E |
| | Smoothness | A | A | A | A | A | A | A | A | A | A | B | A | E | A |

## Claims

1. A coating composition comprising: a hydroxyl group-containing compound (A); a polyisocyanate compound (B); and a curing catalyst (C), and having a solids concentration of 90 mass % or more, wherein
the hydroxyl group-containing compound (A) comprises a hydroxyl group-containing compound having an isocyanurate ring structure (A1).

2. The coating composition according to claim 1, wherein
a content of the hydroxyl group-containing compound having an isocyanurate ring structure (A1) is from 5 to 50 mass %, based on a total solids amount of the hydroxyl group-containing compound (A).

3. The coating composition according to claim 1 or 2, wherein
the hydroxyl group-containing compound (A) comprises a hydroxyl group-containing acrylic resin (A2).

4. The coating composition according to any one of claims 1 to 3, wherein
the hydroxyl group-containing compound (A) comprises a polycaprolactone resin having three or more hydroxyl groups in one molecule (A3').

5. The coating composition according to any one of claims 1 to 4, wherein
a content of the curing catalyst (C) is in a range of from 0.1 to 2.0 mass % based on a total amount of the coating composition.

6. The coating composition according to any one of claims 1 to 5, further comprising a dehydrating agent (D).

7. The coating composition according to any one of claims 1 to 6, which is configured such that, when (i) the coating composition is applied onto a polycarbonate resin substrate so that a film thickness after being dried is 200 µm to form an uncured coating film, (ii) the uncured coating film is heat-cured at 80°C for 1 minute to form a cured coating film, and (iii) a Martens hardness is measured by indenting the cured coating film with a square pyramidal diamond indenter at a temperature of 23°C and a humidity of 50% RH for 20 seconds to a maximum test load of 20 mN,
the cured coating film has the Martens hardness in a range of from 60 to 150 N/mm².

8. The coating composition according to any one of claims 1 to 7, wherein
the coating composition is an in-mold coating composition.

9. The coating composition according to claim 8, further comprising an internal mold release agent (E).

10. The coating composition according to claim 9, wherein
the internal mold release agent (E) comprises a fatty acid amide.

11. An in-mold coating method comprising:
injecting an in-mold coating composition between a molded substrate and an inner wall of a mold;
curing the in-mold coating composition; and
taking out a coated molded article from the mold, wherein
the in-mold coating composition is the coating composition according to any one of claims 1 to 10.

12. The in-mold coating method according to claim 11, wherein
the in-mold coating composition further comprises an internal mold release agent (E).

13. The in-mold coating method according to claim 12, wherein
the internal mold release agent (E) comprises a fatty acid amide.
